(19) Europäisches Patentamt
European Patent Office
Office européen des brevets

(11) EP 2 716 645 A1

(12) EUROPEAN PATENT APPLICATION
published in accordance with Art. 153(4) EPC

(43) Date of publication:
**09.04.2014 Bulletin 2014/15**

(21) Application number: **12788707.3**

(22) Date of filing: **22.05.2012**

(51) Int Cl.:
***C07F 7/08*** *(2006.01)* ***C08G 77/08*** *(2006.01)*
***C09D 7/12*** *(2006.01)* ***C09D 183/00*** *(2006.01)*

(86) International application number:
**PCT/JP2012/063035**

(87) International publication number:
**WO 2012/161185 (29.11.2012 Gazette 2012/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2011 JP 2011116841**

(71) Applicant: **Mitsubishi Rayon Co., Ltd.**
**Tokyo 100-8253 (JP)**

(72) Inventors:
- **YAMATANI, Manabu**
  **Yokohama-shi**
  **Kanagawa 230-0053 (JP)**
- **AKIMOTO, Miki**
  **Yokohama-shi**
  **Kanagawa 230-0053 (JP)**
- **KUWANO, Hideaki**
  **Yokohama-shi**
  **Kanagawa 230-0053 (JP)**

(74) Representative: **ter Meer, Nicolaus**
**Ter Meer Steinmeister & Partner**
**Mauerkircherstrasse 45**
**81679 München (DE)**

# (54) METHOD FOR PRODUCING SILOXANE OLIGOMERS

(57) [Subject] The object of the present invention is to provide a method for producing siloxane oligomers which contain a small amount of ring form and have a high molecular weight.

[Solving Means] An embodiment of the present invention is a method for producing siloxane oligomers which includes using a 2-hydroxycarboxylic acid compound represented by a predetermined formula as a catalyst and subjecting an alkoxysilane to hydrolysis and condensation. According to the production method of the present invention, it is possible to synthesize siloxane oligomers with a low content of siloxanes having cyclic structures and a high molecular weight.

EP 2 716 645 A1

## Description

[Technical Field]

The present invention mainly relates to a method for producing siloxane oligomers.

[Background Art]

In recent years, a transparent plastic material such as an acryl resin or a polycarbonate resin, which has excellent fracture resistance and an excellent lightweight property, is widely used as a substitute for a transparent glass. However, as having lower surface hardness compared to glass, the transparent plastic material has a problem that the surface gets scratched easily. In order to improve those disadvantages, coating the surface with a hard coating agent is generally carried out. As for the hard coating agent, a melamine-based paint, a polyfunctional acrylate-based paint, a silicone-based paint, or the like are widely used. Among them, with the silicone-based paint, a siloxane bond that is the same as glass is formed as a basic skeleton when a hard coating layer is formed. Since the bonding energy of the siloxane bond is higher than the bonding energy of a carbon-carbon bond or a carbon-oxygen bond, that are the basic skeletons of an organic polymer, it is expected that higher scratch resistance and weather resistance can be provided by a hard coating film using a silicone-based paint.

For the silicone-based paint, siloxane oligomers in which organosilane is polymerized to the extent that it is not gellified is generally used as a raw material. It is also known that properties such as scratch resistance or crack resistance of a hard coating film to be produced vary greatly depending on a structure of the siloxane oligomers.

As a method for producing siloxane oligomers, a method of using formic acid as a catalyst is known (Patent Document 1). It is disclosed in Patent Document 1 that a condensation reaction is promoted by using formic acid. However, when formic acid is used as a catalyst, not only the condensation reaction but also a hydrolysis reaction of the siloxane oligomers is promoted. It is generally considered that, to control the structure of the siloxane oligomers, it is effective to use a synthetic method which exhibits a difference in reaction rate between the hydrolysis reaction and condensation reaction. Thus, compared to a case in which other common acid is used, siloxane oligomers with a unique and specific structure are not obtained by the method of using formic acid as a catalyst.

There is also a report by another research group regarding an influence of an addition amount of an acidic aqueous solution and a pH of an acidic aqueous solution added to alkoxysilane on a structure of the oligomer to be produced (Non-Patent Document 1). In Non-Patent Document 1, the oligomer referred to as a network structure corresponds to siloxane oligomers having a linear structure and the oligomer referred to as a cage structure corresponds to the siloxane oligomers having a cyclic structure. It is reported in Non-Patent Document 1 that, by using an aqueous solution having a pH adjusted to 3 or 4 and using it in a small addition amount, the production amount of the siloxane oligomers having a cyclic structure is lowered.

[Citation List]

[Patent Document]

[Patent Document 1] Japanese Patent Application Laid-Open (JP-A) No. 2009-108109

[Non-Patent Document]

[Non-Patent Document 1] Long-Hua Lee, et. al., Journal of Polymer Science: Part A: Polymer Chemistry, Vol. 40, pages 1560-1571 (2002).

[Disclosure Of The Invention]

[Problem to be Solved by the Invention]

However, according to the data of Non-Patent Document 1, the amount of ring form of the siloxane oligomers and the molecular weight of the siloxane oligomers are correlated with each other, and those with smaller amount of the ring form have a lower molecular weight. Thus, it can be said that the amount of the ring form is in trade-off relationship with the size of the molecular weight.

A cured coating film produced by using siloxane oligomers having a small amount of ring form as a raw material has excellent scratch resistance. However, when a cured coating film is produced by using siloxane oligomers having a low molecular weight as a raw material, polymerization shrinkage becomes high during curing so that residual stress

increases in a cured coating film. As a result, there may be a case in which problems like cracks in a cured coating film easily occur.

As described above, according to a method known up until now, it is difficult to produce siloxane oligomers preferred as a raw material of a cured coating film, which contain a small amount of ring form and also have a high molecular weight.

Accordingly, an object of the present invention is to provide a method for producing siloxane oligomers preferred as a raw material of a cured coating film, which contain a small amount of ring form and also have a high molecular weight.

[Means for Solving Problem]

As a result of intensive studies to achieve the object described above, inventors of the present invention succeeded in producing siloxane oligomers containing a small amount of ring form and having a high molecular weight by using an acid catalyst with a specific structure that is used for synthesis of the siloxane oligomers, and completed the present invention accordingly. It was also found that a cured coating film using, as a raw material, the siloxane oligomers which have been produced by the above production method has excellent scratch resistance and crack resistance.

One embodiment of the present invention is a method for producing siloxane oligomers which includes using a 2-hydroxycarboxylic acid compound represented by formula (1) as a catalyst and subjecting an alkoxysilane to hydrolysis and condensation.

[Formula 1]

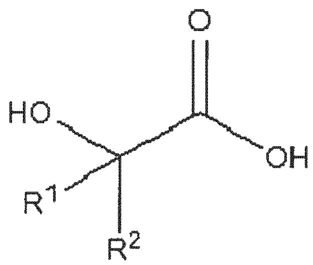

(1)

(In formula (1), $R^1$ and $R^2$ each independently represent a hydrogen atom, a hydroxyl group, a saturated hydrocarbon group having a total carbon atom number of 1 to 20 which may have a substituent group, an unsaturated hydrocarbon group having a total carbon atom number of 1 to 20 which may have a substituent group, an aromatic hydrocarbon group having a total carbon atom number of 6 to 20 which may have a substituent group, a carboxyl group, an ester group having a total carbon atom number of 2 to 20, or an acyl group having a total carbon atom number of 2 to 20. Further, $R^1$ and $R^2$ may bind to each other via a saturated hydrocarbon chain or an unsaturated hydrocarbon chain which may have a substituent group. The substituent group for $R^1$ and $R^2$ is selected from a hydroxyl group, a saturated hydrocarbon group, an unsaturated hydrocarbon group, an aromatic hydrocarbon group, an ester group, a carboxyl group, and an acyl group, and it may be either singular or plural).

One embodiment of the invention is siloxane oligomers which satisfy the following relation in a ZY coordinates space in which (A1 +A2)/A3 is Z and A1/A2 is Y for peak area A1, A2, and A3 described below in an infrared absorption spectrum which is measured by attenuated total reflectance by FT-IR.

$$Y \leq 0.065Z + 0.99 \text{ and } 4.0 \leq Z$$

(in the aforementioned infrared absorption spectrum, the point exhibiting absorbance at 1240 $cm^{-1}$ is defined as point A, the point exhibiting absorbance at 960 $cm^{-1}$ is defined as point B, the point present at 1050 $cm^{-1}$ on line AB is defined as point C, the point exhibiting absorbance at 1050 $cm^{-1}$ is defined as point E, and the point exhibiting absorbance at 860 $cm^{-1}$ is defined as point D. The A1 indicates an area surrounded by line AC, line CE, and the spectrum curve above line AC. The A2 indicates an area surrounded by line CB, line CE, and the spectrum curve above line CB. The A3 indicates an area surrounded by line BD and the spectrum curve above line BD).

One embodiment of the present invention is a curable composition containing the siloxane oligomers that are obtained by the method for producing siloxane oligomers as described above.

One embodiment of the present invention is a method for producing a cured coating film of a polysiloxane including forming a coating film by applying the curable composition on a substrate and curing the coating film by irradiating with active energy rays or by heating.

One embodiment of the present invention is a cured coating film of polysiloxane which is obtained by forming a coating film by applying the curable composition containing the siloxane oligomers on a substrate and curing the coating film by irradiating with active energy rays or by heating.

[Effect of the Invention]

According to the production method of the present invention, siloxane oligomers which have a low content of a siloxane having a cyclic structure and also have a high molecular weight can be synthesized.

[Brief Description of Drawings]

[FIG. 1] It is a graph illustrating one example of the infrared absorption spectrum of a siloxane oligomer.
[FIG. 2] It is the infrared absorption spectrum of siloxane oligomer (1).
[FIG. 3] It is the infrared absorption spectrum of siloxane oligomer (2).
[FIG. 4] It is the infrared absorption spectrum of siloxane oligomer (3).
[FIG. 5] It is the infrared absorption spectrum of siloxane oligomer (4).
[FIG. 6] It is the infrared absorption spectrum of siloxane oligomer (5). [FIG. 7] It is the infrared absorption spectrum of siloxane oligomer (6).
[FIG 8] It is the infrared absorption spectrum of siloxane oligomer (7).
[FIG 9] It is the infrared absorption spectrum of siloxane oligomer (8).
[FIG. 10] It is the infrared absorption spectrum of siloxane oligomer (9).
[FIG 11] It is the infrared absorption spectrum of siloxane oligomer (10).
[FIG. 12] It is the infrared absorption spectrum of siloxane oligomer (11).
[FIG. 13] It is the infrared absorption spectrum of siloxane oligomer (12).
[FIG. 14] It is the infrared absorption spectrum of siloxane oligomer (13).
[FIG 15] It is the infrared absorption spectrum of siloxane oligomer (14).

[Mode(s) for Carrying Out the Invention]

According to the method for producing siloxane oligomers of the present invention, synthesis is performed by hydrolysis and condensation of an alkoxysilane using a 2-hydroxycarboxylic acid compound represented by the following formula (1) as a catalyst in the presence of a solvent.

[Formula 1]

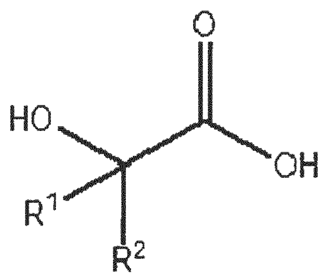

(1)

In formula (1), $R^1$ and $R^2$ each independently represent a hydrogen atom, a hydroxyl group, a saturated hydrocarbon group having a total carbon atom number of 1 to 20 which may have a substituent group, an unsaturated hydrocarbon group having a total carbon atom number of 2 to 20 which may have a substituent group, an aromatic hydrocarbon group having a total carbon atom number of 6 to 20 which may have a substituent group, a carboxyl group, an ester group having a total carbon atom number of 2 to 20, or an acyl group having a total carbon atom number of 2 to 20. Further, $R^1$ and $R^2$ may bind to each other via a saturated hydrocarbon chain or an unsaturated hydrocarbon chain which may have a substituent group. The substituent group for $R^1$ and $R^2$ is selected from a hydroxyl group, a saturated hydrocarbon group, an unsaturated hydrocarbon group, an aromatic hydrocarbon group, an ester group, a

carboxyl group, and an acyl group, and it may be either singular or plural.

In $R^1$ and $R^2$, the total carbon atom number of the saturated hydrocarbon group is preferably 1 to 12, more preferably 1 to 8, and even more preferably 1 to 4. The total carbon atom number of the unsaturated hydrocarbon group is preferably 2 to 12, more preferably 2 to 8, and even more preferably 2 to 4. The total carbon atom number of the aromatic hydrocarbon group is preferably 6 to 14, more preferably 6 to 12, and even more preferably 6 to 10. The total carbon atom number of the ester group is preferably 2 to 12, more preferably 2 to 8, and even more preferably 2 to 4. The total carbon atom number of the acyl group is preferably 2 to 12, more preferably 2 to 8, and even more preferably 2 to 4.

Further, in $R^1$ and $R^2$, the ester group is represented by $-COOR_a$, and preferred examples of $R_a$ include a saturated hydrocarbon group, an unsaturated hydrocarbon group, and an aromatic hydrocarbon group. The acyl group is represented by $-COR_b$, and preferred examples of $R_b$ include a saturated hydrocarbon group, an unsaturated hydrocarbon group, and an aromatic hydrocarbon group.

Specific examples of the 2-hydroxycarboxylic acid compound that is used as a catalyst in the present invention include lactic acid, mandelic acid, tartaric acid, citric acid, 2-hydroxyisobutyric acid, quinic acid, and malic acid.

In the present invention, the reason for having a suppressed production amount of the ring form by using the 2-hydroxycarboxylic acid compound as a catalyst is believed to be due to the fact that, compared to other acids, the 2-hydroxycarboxylic acid compound has a property of promoting a condensation reaction rather than a hydrolysis reaction, although it does not specifically limit the present invention. Herein, when comparisons are made between two systems, i.e., system (1) in which alkoxysilane is subjected to a hydrolysis reaction and a condensation reaction in the presence of a 2-hydroxycarboxylic acid compound and system (2) in which a hydrolysis reaction and a condensation reaction are performed under the same conditions as system (1) except that it does not contain the 2-hydroxycarboxylic acid compound and the pH is adjusted to the same pH as system (1), system (1) using the 2-hydroxycarboxylic acid compound promotes the condensation reaction without significantly changing the hydrolysis rate of the alkoxysilane. For such reasons, by synthesizing the siloxane oligomers using the 2-hydroxycarboxylic acid compound, it becomes possible that the condensation of the alkoxysilane progresses in a state in which a silanol is present in a small amount, and thus the siloxane oligomers having a small amount of ring form are synthesized.

Regarding the hydrolysis reaction and condensation reaction of an alkoxysilane, the reason for having the preferentially promoted condensation reaction by the 2-hydroxycarboxylic acid compound is believed to be as follows. It is disclosed in Non-Patent Document 2 that, as silanol is first protonized under an acid catalyst condition and the electron density of Si is lowered, the condensation is promoted. For a case in which the 2-hydroxycarboxylic acid compound of the present invention is used, a structure in which the 2-hydroxycarboxylic acid compound is coordinated by the hydroxyl group and carbonyl group at $\alpha$ position relative to the hydroxyl group of the silanol is formed. It is believed that, according to formation of such a coordinate structure, electron density of Si is further lowered and the condensation is further promoted. However, the present invention is not limited to the assumptions given above.

Non-Patent Document 2: Sol-Gel Science, The Physics and Chemistry of Sol-Gel Processing, Chapter 3, page 148 (written by C. Jeffrey Brinker and George W. Scherer, Academic Press (1990))

Examples of the alkoxysilane which may be used in the present invention include an alkoxysilane represented by the following formula (2), although not particularly limited thereto.

[Formula 2]

$$R^5_mSi(OR^6)_{4-m} \qquad (2)$$

In formula (2), $R^5$ represents an alkyl group having a total carbon atom number of 1 to 10 which may be substituted, a phenyl group, a vinyl group, a (meth)acryloyl group, an epoxy group, an amide group, a mercapto group, an isocyanate group, or an acyl group having a carbon atom number of 2 to 4. $R^6$ represents an alkyl group having a carbon atom number of 1 to 10. m represents an integer of 0 to 3. Meanwhile, the acyl group is represented by $-COR_c$, and examples of $R_c$ include a saturated hydrocarbon group and an unsaturated hydrocarbon group.

Specific examples of the alkoxysilane include methyl triethoxysilane, methyl trimethoxysilane, phenyl triethoxysilane, phenyl trimethoxysilane, vinyl triethoxysilane, vinyl trimethoxysilane, 2-(3,4-epoxycyclohexyl)ethyl triethoxysilane, 2-(3,4-epoxycyclohexyl)ethyl trimethoxysilane, 3-glycidoxypropyl triethoxysilane, 3-glycidoxypropyl trimethoxysilane, 3-methacryloyloxypropyl triethoxysilane, 3-methacryloyloxypropyl trimethoxysilane, 3-acryloyloxypropyl triethoxysilane, 3-acryloyloxypropyl trimethoxysilane, p-vinylphenylene triethoxysilane, p-vinylphenylene trimethoxysilane, 3-aminopropyl trimethoxysilane, 3-aminopropyl triethoxysilane, 3-chloropropyl trimethoxysilane, 3-chloropropyl triethoxysilane, 3-mercaptopropyl trimethoxysilane, 3-mercaptopropyl triethoxysilane, 3-isocyanatopropyl trimethoxysilane, 3-isocyanatopropyl triethoxysilane, dimethyl diethoxysilane, dimethyl dimethoxysilane, trimethyl methoxysilane, triethyl methoxysilane, trimethyl ethoxysilane, triethyl ethoxysilane, tetraethoxysilane, and tetramethoxysilane. Among them, considering reactivity at a stage of synthesizing the siloxane oligomers and a balance between scratch resistance and crack resistance at the time of producing a cured coating film, methyl trimethoxysilane, 3-glycidoxypropyl trimethoxysilane, dimethyl dimethoxysilane, and phenyl trimethoxysilane are preferable. The alkoxysilane may be used either singly or in

combination of two or more types.

The concentration of the alkoxysilane in a reaction solution is adjusted preferably to 0.1 to 5 mol/l, and more preferably to 0.2 to 4 mol/l. By adjusting the alkoxysilane concentration in a reaction solution to 0.1 mol/l or higher, productivity can be improved without increasing the size of a reaction vessel required for production of the siloxane oligomers. Further, by adjusting it to 5 mol/l or lower, the reaction progresses mildly so that the reaction can be easily controlled.

The 2-hydroxycarboxylic acid compound may be used after being dissolved in water used for the hydrolysis of the alkoxysilane. It is also possible that the 2-hydroxycarboxylic acid compound is put first into a reaction vessel and a monomer, a solvent, water, and the like are added later. It is also possible that the 2-hydroxycarboxylic acid compound is used after being dissolved in a solvent or a monomer. The concentration of the 2-hydroxycarboxylic acid compound in a reaction solution is preferably 0.001 to 0.5 mol/l, and more preferably 0.05 to 0.3 mol/l. When the concentration of the 2-hydroxycarboxylic acid compound is 0.001 mol/l or higher, production of the ring form of the siloxane oligomers can be easily suppressed. Further, when the concentration of the 2-hydroxycarboxylic acid compound is 0.5 mol/l or lower, the amount of the 2-hydroxycarboxylic acid compound that is remained in a cured coating film produced by using the siloxane oligomers as a raw material is not much so that the scratch resistance of the cured coating film is further improved.

Theoretical hydrolysis amount of the alkoxysilane is defined as a molar amount of water required for hydrolysis of alkoxy groups present in the alkoxysilane. The amount of water used for hydrolysis of the alkoxysilane is preferably 3/4 to 13/6 times the theoretical hydrolysis amount of the alkoxysilane.

The water used for hydrolysis of the alkoxysilane may be added all at once or in divided portions. Further, the water used for hydrolysis of the alkoxysilane may be added in a dropwise manner. In order to further suppress the formation of the ring form, it is preferable that water is added in divided portions.

When water is added in two divided portions, for example, it may be considered to add water, as the first addition, to a reaction vessel put with a solvent and the alkoxysilane and again add water, as the second addition, after a lapse of a certain period of time.

When water is added in two divided portions, the amount of water added as the first addition is preferably 1/4 to 3/2 times, and more preferably 1/3 to 1 times the theoretical hydrolysis amount of the alkoxysilane. When the addition amount of water as the first addition is 1/4 times or higher, the productivity is improved. Further, when the addition amount of water as the first addition is 3/2 times or lower, the scratch resistance of the cured coating film to be obtained is improved.

Regarding the amount of water added as the second addition for a case in which water is added in two divided portions, the total amount of water added as the first addition and water added as the second addition is preferably 3/4 to 5/2 times, and more preferably 1 to 3/2 times the theoretical hydrolysis amount of the alkoxysilane. When the total amount of water added as the first addition and water added as the second addition is 3/4 times or higher, the hydrolysis to the siloxane oligomers is sufficiently progressed so that the scratch resistance of the cured coating film to be obtained is improved. In addition, when it is 5/2 times or lower, the production of the ring form of the siloxane oligomers is suppressed so that the scratch resistance of the cured coating film to be obtained is improved.

The temperature at the time of synthesizing the siloxane oligomers is preferably 40°C to 95°C, and more preferably 60°C to 90°C. When the temperature is 40°C or higher, the reaction rate becomes faster so that the productivity is improved. In addition, when it is 95°C or lower, vigorous boiling does not occur so that the reaction can be easily controlled. Meanwhile, it is also possible to synthesize the siloxane oligomers by changing the temperatures for the first step reaction and the second step reaction.

The time for reacting the siloxane oligomers is preferably 10 minutes to 12 hours, and more preferably 30 minutes to 6 hours.

For control of an oligomer structure or adjustment of the solid matter concentration of the oligomer, it is possible to have the siloxane oligomers discharged as distillation extract liquid by discharging vapors generated during the synthesis outside a reaction vessel and by cooling the vapors using a condenser tube.

Meanwhile, as described herein, the solid matter indicates the mass of a siloxane compound which is obtained at the time of having presumably complete hydrolysis · condensation. The concentration of the solid matter means the mass percentage of the solid matter relative to the entire solution.

The siloxane oligomers obtained by the production method of the present invention can be preferably used as a raw material of a transparent hard coating film. As for the method of curing the obtained siloxane oligomers, a method of using active energy rays or a method of curing by heating can be mentioned. To obtain high productivity, it is preferable that the obtained siloxane oligomers are cured by a method of using active energy rays.

When the siloxane oligomers are cured by using active energy rays, an active energy ray-sensitive acid generating agent may be used. The active energy ray-sensitive acid generating agent means an initiator which generates an acid by active energy rays such as visible ray, ultraviolet ray, thermal ray, or electron beam ray. Among them, a photosensitive acid generating agent which generates an acid by visible ray or ultraviolet ray and a heat-sensitive acid

generating agent which generates an acid by thermal ray are preferable. Among them, from the viewpoint of having high activity and not causing thermal deterioration in a plastic material, the photosensitive acid generating agent is more preferable.

Examples of the photosensitive acid generating agent include, although not particularly limited, a diphenyl iodonium-based compound, a triphenyl sulfonium-based compound, an aromatic sulfonium-based compound, and a diazodisulfone-based compound. Specific examples of the photosensitive acid generating agent include IRGACURE 250 (trade name, manufactured by Ciba Specialty Chemicals K. K.), ADEKA Optomer SP-150 and ADEKA Optomer SP-170 (trade names, manufactured by ADEKA Co., Ltd.), CYRACURE UVI-6970, CYRACURE UVI-6974, CYRACURE UVI-6990, CYRACURE UVI-6950, and CYRACURE UVI-6992 (trade names, manufactured by Union Carbide Corp. U.S.A.), DAICAT II (trade name, manufactured by Daicel Chemical Industries, Ltd.) UVAC1591 (trade names, manufactured by Daicel-UCB Co., Ltd.), CI-2734, CI-2855, CI-2823, and CI-2758 (trade names, manufactured by Nippon Soda Co., Ltd.), SI-60L, SI-80L, SI-100L, SI-110L, SI-150L, and SI-180L (trade names, manufactured by Sanshin Chemical Industry, Co., Ltd.), and CPI-100P and CPI-101A (trade names, manufactured by San-Apro Ltd.), that are commercially available. The photosensitive acid generating agent may be used either singly or in combination of two or more types.

The blending amount of the active energy ray-sensitive acid generating agent is preferably within the range of 0.01 to 10 parts by mass relative to 100 parts by mass of the total amount of curable components, although not particularly limited thereto. When it is 0.01 parts by mass or more, the composition is sufficiently cured by irradiating with active energy rays so that there is a tendency of having desirable hardness of a hard coating film. In addition, when it is 10 parts by mass or less, coloration of a cured product is suppressed so that there is a tendency of having favorable surface hardness or scratch resistance.

Further, if necessary, an organic polymer, organic polymer microparticles, colloidal silica, colloidal metal, a filler, a dyestuff, a pigment, a pigment dispersing agent, a flow adjusting agent, a leveling agent, an anti-foaming agent, an ultraviolet absorber, a light stability improver, an antioxidant, gel particles, or microparticle powder may be added to a curable composition which contains as a raw material the siloxane oligomers obtained by the production method of the present invention.

For the purpose of adjusting the concentration of the solid matter, increasing the dispersion stability, improving the coating property, and improving the adhesiveness to a substrate, a solvent may be contained in a curable composition which contains as a raw material the siloxane oligomers obtained by the production method of the present invention. Examples of the organic solvent include alcohols, ketones, ethers, esters, cellosolves, and aromatic compounds, although not particularly limited thereto. Specific examples thereof include methanol, ethanol, 1-propanol, 2-propanol, 1-butanol, 2-butanol, isobutyl alcohol, t-butyl alcohol, benzyl alcohol, 2-methoxyethanol, 2-ethoxyethanol, 2-(methoxymethoxy)-ethanol, 2-butoxyethanol, furfuryl alcohol, tetrahydrofurfuryl alcohol, diethylene glycol monomethyl ether, diethylene glycol monoethyl ether, diethylene glycol monobutyl ether, 1-methoxy-2-propanol, 1-ethoxy-2-propanol, dipropylene glycol monomethyl ether, dipropylene glycol monoethyl ether, tripropylene glycol monomethyl ether, diacetone alcohol, acetone, methyl ethyl ketone, 2-pentanone, 3-pentanone, 2-hexanone, methyl isobutyl ketone, 2-heptanone, 4-heptanone, diisobutyl ketone, cyclohexanone, methylcyclohexanone, acetophenone, diethyl ether, dipropyl ether, diisopropyl ether, dibutyl ether, dihexyl ether, anisole, phenetole, tetrahydrofuran, tetrahydropyran, 1,2-dimethoxyethane, 1,2-diethoxyethane, 1,2-dibutoxyethane, diethylene glycol dimethyl ether, diethylene glycol diethyl ether, diethylene glycol dibutyl ether, glycerin ether, methyl acetate, ethyl acetate, propyl acetate, isopropyl acetate, butyl acetate, isobutyl acetate, sec-butyl acetate, pentyl acetate, isopentyl acetate, 3-methoxybutyl acetate, 2-ethyl butyl acetate, 2-ethyl hexyl acetate, methyl propionate, ethyl propionate, butyl propionate, $\gamma$-butyrolactone, 2-methoxyethyl acetate, 2-ethoxyethyl acetate, 2-butoxyethyl acetate, 2-phenoxyethyl acetate, diethylene glycol monoethyl ether acetate, diethylene glycol monobutyl ether acetate, benzene, toluene, and xylene. They may be used either singly or in combination of two or more types.

The content of the organic solvent in a curable composition is preferably in the range of 10 to 1000 parts by mass relative to 100 parts by mass of the total solid matter. When the content of the organic solvent is 10 parts by mass or more relative to 100 parts by mass of the total solid matter, favorable storage stability of the composition is obtained. In addition, increase in viscosity of the composition is suppressed so that a coating film can be formed favorably. In addition, when the content of the organic solvent is 1000 parts by mass or less relative to 100 parts by mass of the total solid matter, a coating film with a sufficient thickness can be obtained after curing, and a coating film with excellent scratch resistance can be obtained.

Thickness of the coating film of a cured product of polysiloxane is preferably 0.5 to 100 $\mu$m.

The curable composition containing as a raw material the siloxane oligomers that are obtained by the production method of the present invention can be cured by, after coating on a substrate having a plane shape film, irradiating with active energy rays. It is also possible that, after coating on a substrate having a three-dimensional shape, the curable composition is cured by irradiating with active energy rays.

For forming of a coating film, a spray coating method, a roll coating method, a gravure coating method, a flexographic coating method, a screen method, a spin coating method, a flow coating method, and an electrostatic coating method, a dipping method, or the like can be used.

Examples of the active energy rays that are used for curing of the coating film include vacuum ultraviolet ray, ultraviolet ray, visible ray, near infrared ray, infrared ray, far infrared ray, microwave, electron ray, $\beta$ ray, and $\gamma$ ray. Among them, from the viewpoint of having fast polymerization rate and relatively low deterioration of a substrate, it is preferable to use ultraviolet ray or visible ray in combination with a photosensitive acid generating agent. Specific examples of the active energy rays include active energy rays emitted from a light source such as a low pressure mercury lamp, an intermediate pressure mercury lamp, a high pressure mercury lamp, an ultrahigh pressure mercury lamp, an incandescent electric lamp, a xenon lamp, a halogen lamp, a carbon arc lamp, a metal halide lamp, a fluorescent lamp, a tungsten lamp, a gallium lamp, an excimer lamp, an excimer laser, or sun light. The active energy rays may be used either singly or in combination of plural types that are different from each other. When active energy rays of plural types that are different from each other are used, they may be irradiated simultaneously or in order.

The substrate on which a coating film is formed according to the invention is not particularly limited, and it may be any one of an organic material and an inorganic material. Examples thereof include various plastics, metal, paper, a wood material, an inorganic material, an electrodeposited plate, a laminate plate, or the like. Among them, a plastic is preferred as a substrate. Specific examples of the plastic include methyl polymethacrylate, polycarbonate, polystyrene, and polymethacryl styrene.

Further, regarding the substrate, a primer layer may be formed on a surface of the substrate to improve adhesiveness to the coating film. Preferred examples of the primer layer include a layer obtained by photocuring of a composition containing a photo radical polymerizable vinyl-based compound and a photo radical polymerization initiator. As for the specific examples of the primer layer, a composition containing a polyfunctional (meth)acrylate having two or more (meth)acryloyloxy groups in the molecule and active energy ray-sensitive radical polymerization initiator can be used.

Measurement of an infrared absorption spectrum of the siloxane oligomers can be performed by attenuated total reflectance (ATR) based on FT- IR spectroscopy after coating a substrate with a solution of the siloxane oligomers and drying the solvent for 2 hours to 6 hours using a dyer set at room temperature or temperature of 30°C or lower.

(Structure of siloxane oligomers)

When a cured coating film is formed by using a curable composition which contains the siloxane oligomers as a raw material, it is known that the structure of the siloxane oligomers being used has a great influence on a structure of the cured coating film and it also has a great influence on performance of the cured coating film as a hard coat. There is a correlation between the amount of ring form in the siloxane oligomers and the amount of ring form in a cured coating film to be obtained, and in order to obtain high scratch resistance, it is advantageous to have a lower amount of cyclic. Further, since the production of a cured coating film by using the siloxane oligomers with a high molecular weight yields lower shrinkage during polymerization, cracks are not easily formed in the cured coating film. Thus, the siloxane oligomers which have a high molecular weight and a small amount of ring form are preferred as a raw material for a transparent hard coat.

The siloxane bond has absorptions in 960 to 1240 $cm^{-1}$, and among them, the absorption at a wave number higher than 1050 $cm^{-1}$ originates from a cyclic siloxane bond while the absorption at a lower wave number originates from a linear siloxane bond. Meanwhile, the cyclic siloxane bond indicates that a cyclic structure is formed in the siloxane bond and the linear siloxane bond indicates that a cyclic structure is not formed.

FIG 1 is an example of the infrared absorption spectrum of the siloxane oligomers, which is measured by attenuated total reflectance by FT-IR. Meanwhile, FIG 1 is the infrared absorption spectrum that is measured for the siloxane oligomer obtained from Example 1 of the present invention. Measurement of the infrared absorption spectrum was performed by attenuated total reflectance based on FT- IR after coating a substrate with a solution of the siloxane oligomers and drying the solvent for 2 hours to 6 hours using a dyer set at the temperature of 30°C or lower. In FIG. 1, the point exhibiting absorbance at 1240 $cm^{-1}$ is defined as point A, the point exhibiting absorbance at 960 $cm^{-1}$ is defined as point B, the point present at 1050 $cm^{-1}$ on line AB is defined as point C, and the point exhibiting absorbance at 1050 $cm^{-1}$ is defined as point E. The peak area A1 derived from a cyclic siloxane bond indicates an area surrounded by line AC, line CE, and the spectrum curve above line AC. The peak area A2 derived from a linear siloxane bond indicates an area surrounded by line CB, line CE, and the spectrum curve above line CB.

Further, a silanol group has absorptions in 860 to 960 $cm^{-1}$ and, when a line connecting point B and point D exhibiting absorbance at 860 $cm^{-1}$ is defined as line BD, the peak area A3 derived from a silanol group indicates an area surrounded by line BD and the spectrum curve above line BD.

When the siloxane oligomers are produced by a method known in the art, by increasing the siloxane bond to have a higher molecular weight, the ring form can be formed in a greater amount as well. However, the siloxane oligomers that are produced according to the method of the present invention have limited production of the ring form even when a high molecular weight is obtained by increasing the siloxane bond.

Accordingly, the inventors of the present invention found that, as a result of intensive studies, a cured coating

film having excellent scratch resistance and crack resistance can be obtained by using the siloxane oligomers which satisfy the following relation.

The siloxane oligomers according to the present invention satisfy the following relation in the ZY coordinates in which (A1 +A2)/A3 is Z and A1/A2 is Y.

$$Y \leq 0.065Z + 0.99 \text{ and } 4.0 \leq Z$$

The cured coating film produced by using the siloxane oligomers which satisfy the above relation has a good balance between scratch resistance and crack resistance, and thus the siloxane oligomers within the above range are the preferred structure.

Further, the siloxane oligomers according to the present invention preferably satisfy the following relation in the XY coordinates in which a weight average molecular weight Mw in terms of polystyrene by GPC method is X and A1/A2 as an indicator of the production amount of the ring form is Y.

$$Y \leq (0.7/2400)X + 1.025$$

and

$$600 < X$$

A cured coating film produced by using the siloxane oligomers which satisfy the above relations has a good balance between scratch resistance and crack resistance.

The siloxane oligomers according to the present invention have a weight average molecular weight Mw of 600 or higher in terms of polystyrene by GPC method. Upper limit of Mw (X) is, although not particularly limited, preferably 3000 or lower. Mw is more preferably in the range of 700 to 2500. When Mw is 600 or higher, polymerization shrinkage becomes small when a cured coating film is produced by using it as a raw material, and thus favorable crack resistance is obtained. In addition, when it is 3000 or lower, the production amount of the ring form in an oligomer is limited so that the cured coating film produced by using it as a raw material has favorable scratch resistance. Further, Y is preferably 0.9 or higher.

In the siloxane oligomers, there is generally a rough correlation between the amount of siloxane bond and the molecular weight. As there are more siloxane bonds, polymerization shrinkage becomes smaller when a cured coating film is produced, and thus a cured coating film with excellent crack resistance is obtained. The amount of the siloxane bond can be evaluated by using, as an index, (A1 +A2)/A3 that is calculated using the peak area A1, A2, and A3 obtained from the infrared absorption spectrum explained above. The greater siloxane bonds would lead to the higher (A1 + A2)/A3.

With regard to the siloxane oligomers according to the present invention, (A1 + A2)/A3 is preferably in the range of 4.0 to 14.0, and more preferably in the range of 5.0 to 11.0. When (A1 +A2)/A3 is 4.0 or higher, polymerization shrinkage becomes smaller when a cured coating film is produced by using it as a raw material, and thus favorable crack resistance is obtained. In addition, when it is 14.0 or lower, the production amount of the ring form in an oligomer is limited so that the cured coating film produced by using it as a raw material has favorable scratch resistance.

The amount of the ring form of the siloxane oligomers according to the present invention can be evaluated by using, as an index, a ratio between the peak area A1 and A2 (A1/A2) obtained from the infrared absorption spectrum explained above. The smaller amount of the cyclic would lead to the lower A1/A2.

The siloxane oligomers having A1/A2 in the range of 0.9 or higher can be easily synthesized according to the method of the present invention, for example. Further, upper limit of A1/A2 is preferably 1.9 or lower, and more preferably 1.6 or lower. When A1/A2 is 1.9 or lower, the cured coating film produced by using it as a raw material has favorable scratch resistance.

The method for obtaining the siloxane oligomers which satisfy the aforementioned relation is not particularly limited, and they can be preferably produced according to a production method of one embodiment of the present invention. In addition, a method of synthesizing the siloxane oligomers by condensation in a state in which the alkoxy groups of an alkoxysilane are remained in a certain amount by slowly adding water to a reaction vessel after heating a mixture of alkoxysilane and a solvent in a reaction vessel can be mentioned. In addition, a method of synthesizing the siloxane oligomers by heating a mixture of an alkoxysilane, a solvent, and water in a reaction vessel, adding an acidic catalyst first, and adding a basic catalyst at a later stage of the synthesis can be also mentioned. In addition, a method of synthesizing the siloxane oligomers by heating a mixture of an alkoxysilane, a solvent, and water in a reaction vessel and performing the reaction while slowly removing water from the reaction system during the reaction can be also

mentioned.

[Examples]

Hereinbelow, the present invention is explained in detail in view of the examples.

[Example 1]

<pH measurement of aqueous acid solution>

By using a pH meter (trade name: MP230, manufactured by Mettler Toledo International Inc.), the pH of an aqueous acid solution used for synthesis of the oligomer was measured. Results of the pH measurement are shown in Table 1.

<Synthesis of siloxane oligomer (1)>

To 100 g of methyl trimethoxysilane (manufactured by Shin-Etsu Chemical Co., Ltd., molecular weight of 136) as an alkoxysilane, 85.78 g of isopropyl alcohol was added as a solvent in an eggplant shaped flask. With reflux of the top part of the eggplant shaped flask, it was heated in a hot bath at 80°C under stirring. When the solution reaches 80°C, 13.23 g of a 1.0 mol/l aqueous solution of mandelic acid was added to the eggplant shaped flask to start the reaction. After 110 minutes from the start of the reaction, 26.45 g of water was added and the reaction was further allowed to occur. After 120 minutes from the start of the reaction, the eggplant shaped flask was taken out from the hot bath, and according to immediate cooling in an ice bath at 0°C, the reaction was terminated and the siloxane oligomer (1) was obtained.

[Examples 2 to 5 and Comparative example 1]

The siloxane oligomers (2) to (6) were obtained in the same manner as Example 1 except that 1.0 mol/l aqueous solution of the compound described in Table 1 is added instead of 1.0 mol/l aqueous solution of mandelic acid.

[Comparative example 2]

To 100 g of methyl trimethoxysilane (manufactured by Shin-Etsu Chemical Co., Ltd., molecular weight of 136) as an alkoxysilane, 85.78 g of isopropyl alcohol was added as a solvent in an eggplant shaped flask. With reflux of the top part of the eggplant shaped flask, it was heated in a hot bath at 80°C under stirring. When the solution reaches 80°C, 13.23 g of a 0.1 mol/l hydrochloric acid was added to the eggplant shaped flask to start the reaction. After 110 minutes from the start of the reaction, 26.45 g of water was added and the reaction was further allowed to occur. After 120 minutes from the start of the reaction, the eggplant shaped flask was taken out from the hot bath, and according to immediate cooling in an ice bath at 0°C, the reaction was terminated and the siloxane oligomer (7) was obtained.

[Example 6]

To 100 g of methyl trimethoxysilane (manufactured by Shin-Etsu Chemical Co., Ltd., molecular weight of 136) as an alkoxysilane, 85.78 g of isopropyl alcohol was added as a solvent in an eggplant shaped flask. With reflux of the top part of the eggplant shaped flask, it was heated in a hot bath at 80°C under stirring. When the solution reaches 80°C, 26.45 g of a 1.0 mol/l aqueous solution of mandelic acid was added to the eggplant shaped flask to start the reaction. After 80 minutes from the start of the reaction, 13.23 g of water was added and the reaction was further allowed to occur. After 90 minutes from the start of the reaction, the eggplant shaped flask was taken out from the hot bath, and according to immediate cooling in an ice bath at 0°C, the reaction was terminated and the siloxane oligomer (8) was obtained.

[Comparative example 3]

To 100 g of methyl trimethoxysilane (manufactured by Shin-Etsu Chemical Co., Ltd., molecular weight of 136) as an alkoxysilane, 85.78 g of isopropyl alcohol was added as a solvent in an eggplant shaped flask. With reflux of the top part of the eggplant shaped flask, it was heated in a hot bath at 80°C under stirring. When the solution reaches 80°C, 26.45 g of a 1.0 mol/l aqueous solution of 3-hydroxybutyric acid was added to the eggplant shaped flask to start the reaction. After 170 minutes from the start of the reaction, 13.23 g of water was added and the reaction was further allowed to occur. After 180 minutes from the start of the reaction, the eggplant shaped flask was taken out from the hot

bath, and according to immediate cooling in an ice bath at 0°C, the reaction was terminated and the siloxane oligomer (9) was obtained.

[Comparative example 4]

The siloxane oligomer (10) was obtained in the same manner as Comparative example 3 except that 1.0 mol/l aqueous solution of the compound (acetic acid) described in Table 1 is added instead of 1.0 mol/l aqueous solution of 3-hydroxybutyric acid.

[Example 7]

To 100 g of methyl trimethoxysilane (manufactured by Shin-Etsu Chemical Co., Ltd., molecular weight of 136) as an alkoxysilane, 85.78 g of isopropyl alcohol was added as a solvent in an eggplant shaped flask. With reflux of the top part of the eggplant shaped flask, it was heated in a hot bath at 80°C under stirring. When the solution reaches 80°C, 26.45 g of a 1.0 mol/l aqueous solution of lactic acid was added to the eggplant shaped flask to start the reaction. After 230 minutes from the start of the reaction, 13.23 g of water was added and the reaction was further allowed to occur. After 240 minutes from the start of the reaction, the eggplant shaped flask was taken out from the hot bath, and according to immediate cooling in an ice bath at 0°C, the reaction was terminated and the siloxane oligomer (11) was obtained.

[Comparative example 5]

The siloxane oligomer (12) was obtained in the same manner as Example 7 except that 1.0 mol/l aqueous solution of the compound (formic acid) described in Table 1 is added instead of 1.0 mol/l aqueous solution of lactic acid.

[Example 8]

To 100 g of methyl trimethoxysilane (manufactured by Shin-Etsu Chemical Co., Ltd., molecular weight of 136) as an alkoxysilane, 85.78 g of isopropyl alcohol was added as a solvent in an eggplant shaped flask. Then, a tube with two branches was installed on top of the eggplant shaped flask. A first condenser tube was installed such that all the vapor entered into the branch at one side returns to the eggplant shaped flask while a second condenser tube was installed such that all the vapor entered into the branch at the other side exits outside the flask. When the solution reaches 80°C, 26.45 g of a 1.0 mol/l aqueous solution of mandelic acid was added to the eggplant shaped flask to start the reaction. On top of the eggplant shaped flask, a jacket for insulation was installed such that temperature of the vapor entering into the second condenser tube at exit side is in the range of 65°C to 70°C. After 230 minutes from the start of the reaction, 13.23 g of water was added and the reaction was further allowed to occur. After 240 minutes from the start of the reaction, the eggplant shaped flask was taken out from the hot bath, and according to immediate cooling in an ice bath at 0°C, the reaction was terminated and the siloxane oligomer (13) was obtained. Further, as a result of measuring the mass of the distillation extract liquid which has been removed from the flaks with a side arm, it was found to be 13.73 g.

[Comparative example 6]

The siloxane oligomer (14) was obtained in the same manner as Example 8 except that 1.0 mol/l aqueous solution of the compound (formic acid) described in Table 1 is added instead of 1.0 mol/l aqueous solution of mandelic acid. As a result of measuring the mass of the distillation extract liquid which has been taken out from the flaks with a side arm, it was found to be 10.53 g.

<Production of cured coating film (1)>

To 100 g of the siloxane oligomer (1) obtained from Example 1, 9.5 g of 1-methoxy-2-propanol (hereinbelow, referred to as "PGM"), 9.5 g of γ-butyrolactone, 0.8 g of a photosensitive acid generating agent (trade name: SAN-AID SI-100L, manufactured by Sanshin Chemical Industry, Co., Ltd.), and 0.02 g of silicone-based surface active agent (trade name: L-7001, manufactured by Dow Coming Toray Co., Ltd.) as a leveling agent were mixed in to obtain a composition for coating.

A suitable amount of the composition for coating was added dropwise on top of an acryl plate (manufactured by Mitsubishi Rayon Co., Ltd., trade name: ACRYLITE L) having a length of 10 cm, a width of 10 cm, and a thickness of 3 mm, coated by bar coating method (using a bar coater No. 26), and then dried for 10 min using a dryer at 90°C.

Further, by irradiating with ultraviolet ray of about 1,000 mJ/cm$^2$ using a high pressure mercury lamp (ultraviolet ray irradiation device produced by ORC Manufacturing Co. Ltd., trade name: HANDY-UV-1200, QRU-2161 type), a

cured coating film with a film thickness of about 5 μm was obtained. Meanwhile, the ultraviolet irradiation quantity was measured by using a ultraviolet irradiance meter (manufactured by ORC Manufacturing Co. Ltd., product name: UV-351, peak sensitivity wavelength: 360 nm). The cured coating film sample was dried for 10 min by using a dryer at 90°C to obtain the cured coating film (1).

<Production of cured coating films (2) to (12)>

Each of the cured coating films (2) to (12) was produced in the same manner as the cured coating film (1) except that the siloxane oligomers (2) to (12) obtained from different Examples and Comparative examples are used instead of the siloxane oligomer (1).

<Production of cured coating film (13)>

The cured coating film (13) was produced in the same manner as the cured coating film (1) except that 100 g containing 86.47 g of the siloxane oligomer (13) obtained from Example 8 added with 13.53 g of methanol in which concentration of the solid matter is the same as the siloxane oligomer (1) is used instead of the siloxane oligomer (1).

<Production of cured coating film (14)>

The cured coating film (14) was produced in the same manner as the cured coating film (1) except that 100 g containing 89.62 g of the siloxane oligomer (14) obtained from Comparative example 6 added with 10.38 g of methanol in which concentration of the solid matter is the same as the siloxane oligomer (1) is used instead of the siloxane oligomer (1).

[Evaluation of siloxane oligomers]

1) Measurement of infrared absorption

According to attenuated total reflectance by FT-IR (trade name: NEXUS 470, manufactured by Thermo Nicolet), measurement of an infrared absorption spectrum of the siloxane oligomers was performed. For the spectrum measurement of the siloxane oligomers, a suitable amount was added dropwise on top of an acryl plate (manufactured by Mitsubishi Rayon Co., Ltd., trade name: ACRYLITE L) having a length of 10 cm, a width of 10 cm, and a thickness of 3 mm, coated by bar coating method (using a bar coater No. 26), and then kept in a dryer at 30°C for 4 hours to dry the solvent, and the obtained siloxane oligomer layer was subjected to the measurement. For the measurement, an accessory for measuring ATR (trade name: FOUNDATION ThunderDome, manufactured by Spectra Company) was used, and the measurement was performed under a resolution of 4 $cm^{-1}$ and an accumulation number of 32 times. Further, for analysis of a peak area, by using an accumulation tool of a software for FT-IR analysis (trade name; OMNIC, manufactured by Thermo Nicolet), line AB and line BD are drawn and then point C is determined to obtain the peak area A1, A2, and A3. From the infrared absorption spectrum obtained, the peak area ratio A1/A2 and the peak area ratio A3/(A1 + A2) were obtained.

2) Measurement of molecular weight by GPC method

As for the molecular weight of the siloxane oligomers, the molecular weight in terms of polystyrene was obtained by a GPC method. For the GPC method, the sample for measurement was prepared by diluting the siloxane oligomers as a subject for measurement with THF such that the concentration of the solid matter is 1% by weight. Further, for the measurement by the GPC method, two columns of TSK-GEL GMHXL (manufactured by TOSOH Corporation) and one column of TSK-GEL G1000HXL (manufactured by TOSOH Corporation) were connected and used as a column for analysis. Further, as an eluent liquid, tetrahydrofuran (flow rate: 1.0 ml/minute) was used. The column temperature was set at 40°C, and as a detector, Refractive Index detector 2414 (manufactured by Waters) was used.

[Evaluation of cured coating film]

1) Scratch resistance

Surface of an acryl plate having a cured coating film was subjected to ten times of a reciprocative scrubbing with a #0000 steel wool under a pressure of 9.8 x $10^4$ Pa, and the extent of scratch produced in a region of 1 cm x 3 cm was observed. The evaluation was made according to the following criteria. The results are shown in Table 1.

A: There is almost no scratch.
B: 1 to 9 scratches. There is a glossy surface.
C: 10 to 49 scratches. There is a glossy surface.

2) Crack resistance

Surface of an acryl plate having a cured coating film was kept in a hot water at 90°C for 4 hours. Then, the occurrence state of cracks was confirmed with a naked eye.

O: There are no cracks on the entire surface of a sample.
Δ: Cracks have occurred in part of a sample
X: Cracks have occurred on the entire surface of a sample.

As shown in Table 1, when the siloxane oligomer obtained using the 2-hydroxycarboxylic acid compound as a catalyst as in Examples 1 to 8 (i.e., amount of the ring form is small and molecular weight is high) is used, it was possible to produce a cured coating film having excellent scratch resistance and crack resistance.
On the other hand, when the siloxane oligomer obtained using a catalyst other than the 2-hydroxycarboxylic acid compound as in Comparative examples 1 to 6 is used, the produced cured coating film was inferior to the Example in terms of scratch resistance and crack resistance.
Thus, it is indicated that a cured coating film having excellent scratch resistance and crack resistance can be produced according to the present invention.

[Table 1]

| | Catalyst | X | Y | Z | (0.7/2400)*X + 1.025 | 0.065*Z + 0.99 | Scratch resistance | Crack resistance |
|---|---|---|---|---|---|---|---|---|
| | | Mw | A/A2 | (A1 + A2)/A3 | | | | |
| Example 1 | Mandelic acid | 987 | 1.14 | 5.84 | 1.31 | 1.37 | A | O |
| Example 2 | Lactic acid | 784 | 1.17 | 5.45 | 1.25 | 1.34 | A | Δ |
| Example 3 | Tartaric acid | 1519 | 1.26 | 7.07 | 1.47 | 1.45 | B | O |
| Example 4 | Citric acid | 1342 | 1.2 | 7.68 | 1.42 | 1.49 | A | O |
| Example 5 | 2-Hydroxybutyric acid | 989 | 1.12 | 6.05 | 1.31 | 1.38 | A | O |
| Comp. example 1 | Formic acid | 537 | 1.4 | 3.85 | 1.18 | 1.24 | B | X |
| Comp. example 2 | Hydrochloric acid | 806 | 1.74 | 5.16 | 1.26 | 1.33 | C | Δ |
| Example 6 | Mandelic acid | 1655 | 1.34 | 10.59 | 1.51 | 1.68 | A | O |
| Comp. example 3 | 3-Hydroxybutyric acid | 749 | 1.37 | 5.34 | 1.24 | 1.34 | B | Δ |
| Comp. example 4 | Acetic acid | 1095 | 1.61 | 5.51 | 1.34 | 1.35 | C | O |
| Example 7 | Lactic acid | 2069 | 1.57 | 11.72 | 1.63 | 1.75 | B | O |
| Comp. example 5 | Formic acid | 983 | 1.82 | 6.98 | 1.31 | 1.44 | C | O |
| Example 8 | Mandelic acid | 2687 | 1.56 | 10.39 | 1.81 | 1.67 | B | O |
| Comp. example 6 | Formic acid | 913 | 1.77 | 5.05 | 1.29 | 1.32 | C | O |

The siloxane oligomers produced by the production method of the present invention or a curable composition containing the siloxane oligomers which satisfy the relation of the present invention can be used as a coating material

having excellent scratch resistance and crack resistance.

[Industrial Applicability]

Although they are not particularly limited, the siloxane oligomers of the present invention are applicable, for example, to a coating material for a resin member for a window of an automobile, a coating material for a member for a head lamp of an automobile, a coating material for a protective plate for a liquid crystal display of a cellular phone, a digital camera, or the like, a surface coating material for a member of a touch panel, a coating material for a highway sound-proof wall made of a resin, or the like.

## Claims

1. A method for producing siloxane oligomers comprising using a 2-hydroxycarboxylic acid compound represented by the following formula (1) as a catalyst and subjecting an alkoxysilane to hydrolysis and condensation:

[Formula 1]

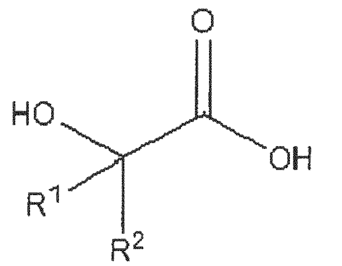

(1)

(In formula (1), $R^1$ and $R^2$ each independently represent a hydrogen atom, a hydroxyl group, a saturated hydrocarbon group having a total carbon atom number of 1 to 20 which may have a substituent group, an unsaturated hydrocarbon group having a total carbon atom number of 2 to 20 which may have a substituent group, an aromatic hydrocarbon group having a total carbon atom number of 6 to 20 which may have a substituent group, a carboxyl group, an ester group having a total carbon atom number of 2 to 20, or an acyl group having a total carbon atom number of 2 to 20. Further, $R^1$ and $R^2$ may bind to each other via a saturated hydrocarbon chain or an unsaturated hydrocarbon chain which may have a substituent group. The substituent group for $R^1$ and $R^2$ is selected from a hydroxyl group, a saturated hydrocarbon group, an unsaturated hydrocarbon group, an aromatic hydrocarbon group, an ester group, a carboxyl group, and an acyl group, and it may be either singular or plural).

2. The method for producing siloxane oligomers according to claim 1, wherein the alkoxysilane is represented by the following formula (2);
[Formula 2]

$$R^5_mSi(OR^6)_{4-m} \quad (2)$$

(In formula (2), $R^5$ represents an alkyl group having a total carbon atom number of 1 to 10 which may be substituted, a phenyl group, a vinyl group, a (meth)acryloyl group, an epoxy group, an amide group, a mercapto group, an isocyanate group, or an acyl group having a carbon atom number of 2 to 4. $R^6$ represents an alkyl group having a carbon atom number of 1 to 10. m represents an integer of 0 to 3).

3. Siloxane oligomers which satisfy the following relation in ZY coordinates in which (A1 + A2)/A3 is denoted by Z and A1/A2 is denoted by Y for peak areas A1, A2, and A3 described below in an infrared absorption spectrum which is measured by attenuated total reflectance by FT-IR.

$$Y < 0.065Z + 0.99 \text{ and } 4.0 < Z$$

(In the infrared absorption spectrum, the point exhibiting absorbance at 1240 $cm^{-1}$ is defined as point A, the point exhibiting absorbance at 960 $cm^{-1}$ is defined as point B, the point present at 1050 $cm^{-1}$ on line AB is defined as

point C, the point exhibiting absorbance at 1050 $cm^{-1}$ is defined as point E, and the point exhibiting absorbance at 860 $cm^{-1}$ is defined as point D. The A1 indicates an area surrounded by line AC, line CE, and the spectrum curve above line AC. The A2 indicates an area surrounded by line CB, line CE, and the spectrum curve above line CB. The A3 indicates an area surrounded by line BD and the spectrum curve above line BD).

**4.** The siloxane oligomers according to claim 3, wherein the following relation is satisfied in the XY coordinates in which a weight average molecular weight (Mw) in terms of polystyrene by a GPC method is denoted by X and a ratio (A1/A2) between the peak areas A1 and A2 in the infrared absorption spectrum is denoted by Y;

$$Y \leq (0.7/2400)X + 1.025$$

and

$$600 < X.$$

**5.** A curable composition comprising the siloxane oligomers that are obtained by the method for producing siloxane oligomers described in claim 1 or 2.

**6.** A method for producing a cured polysiloxane coating film comprising forming a coating film by applying the curable composition described in claim 5 on a substrate and curing the coating film by irradiating with active energy rays or by heating.

**7.** A cured polysiloxane coating film obtained by forming a coating film by applying the curable composition containing the siloxane oligomers described in claim 3 or 4 on a substrate and curing the coating film by irradiating with active energy rays or by heating.

[FIG. 1]

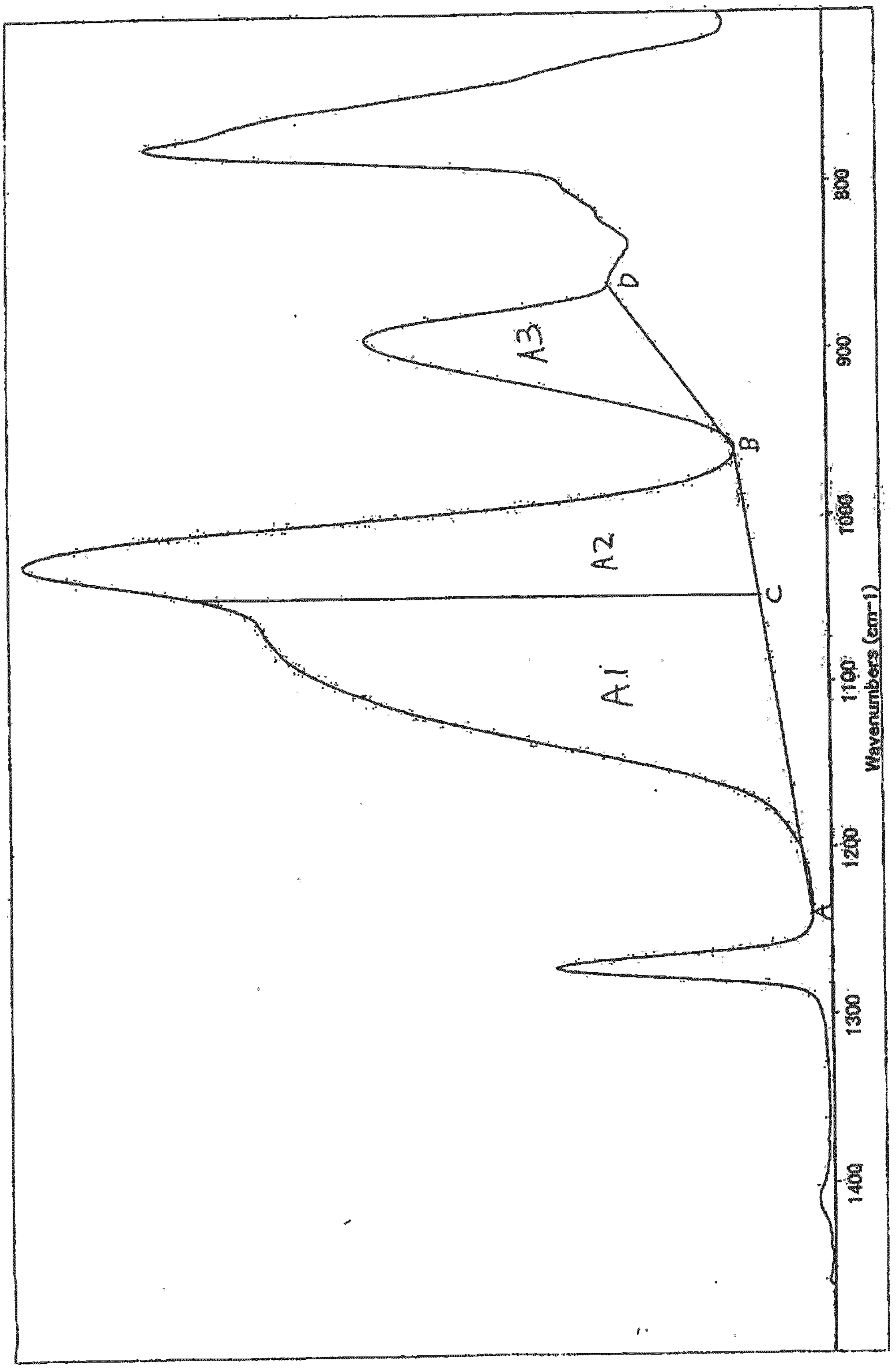

Wavenumbers (cm-1)
800
900
1000
1100
1200
1300
1400
A1
A2
A3
A
B
C
D

[FIG. 2]

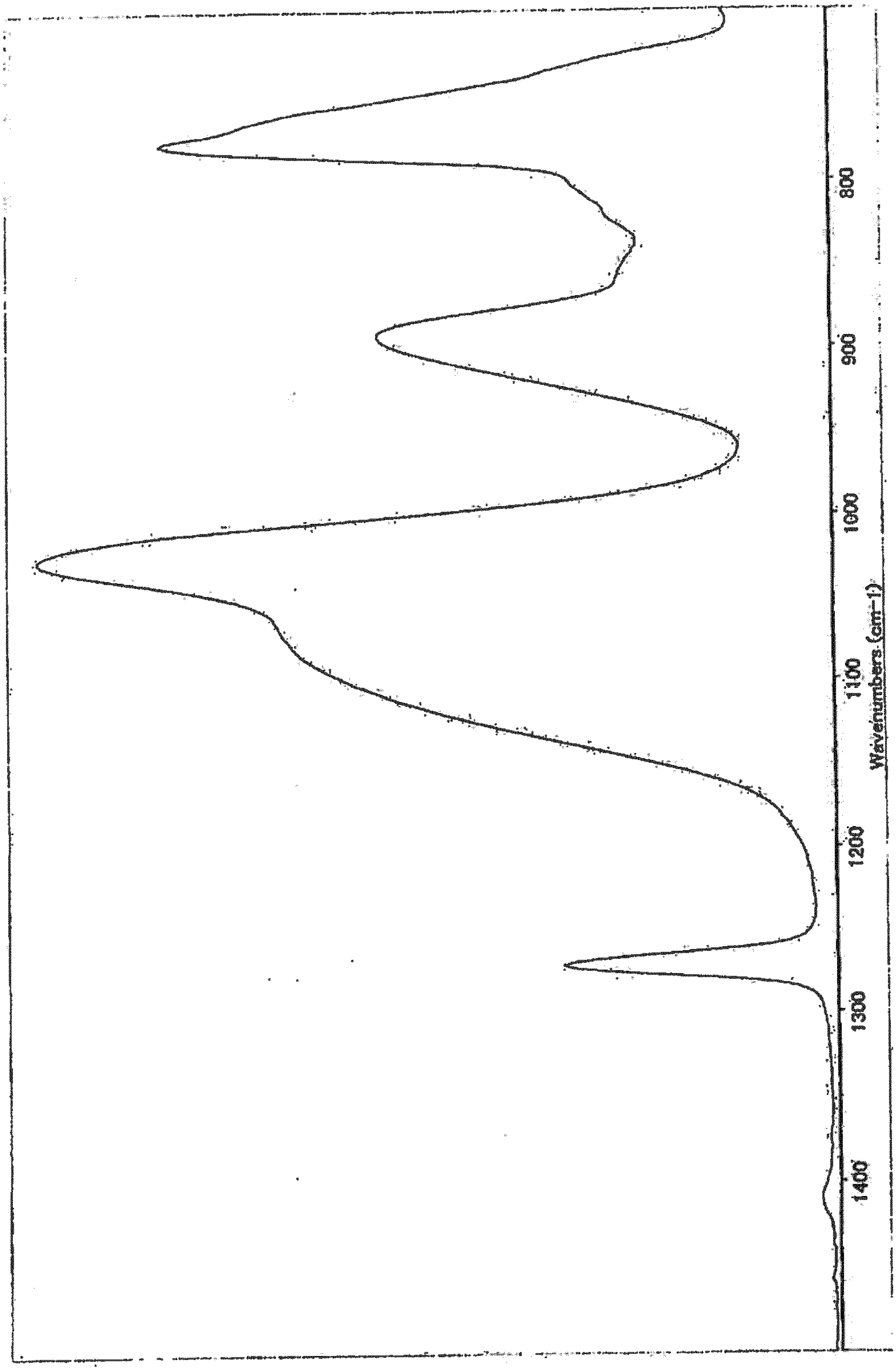

[FIG. 3]

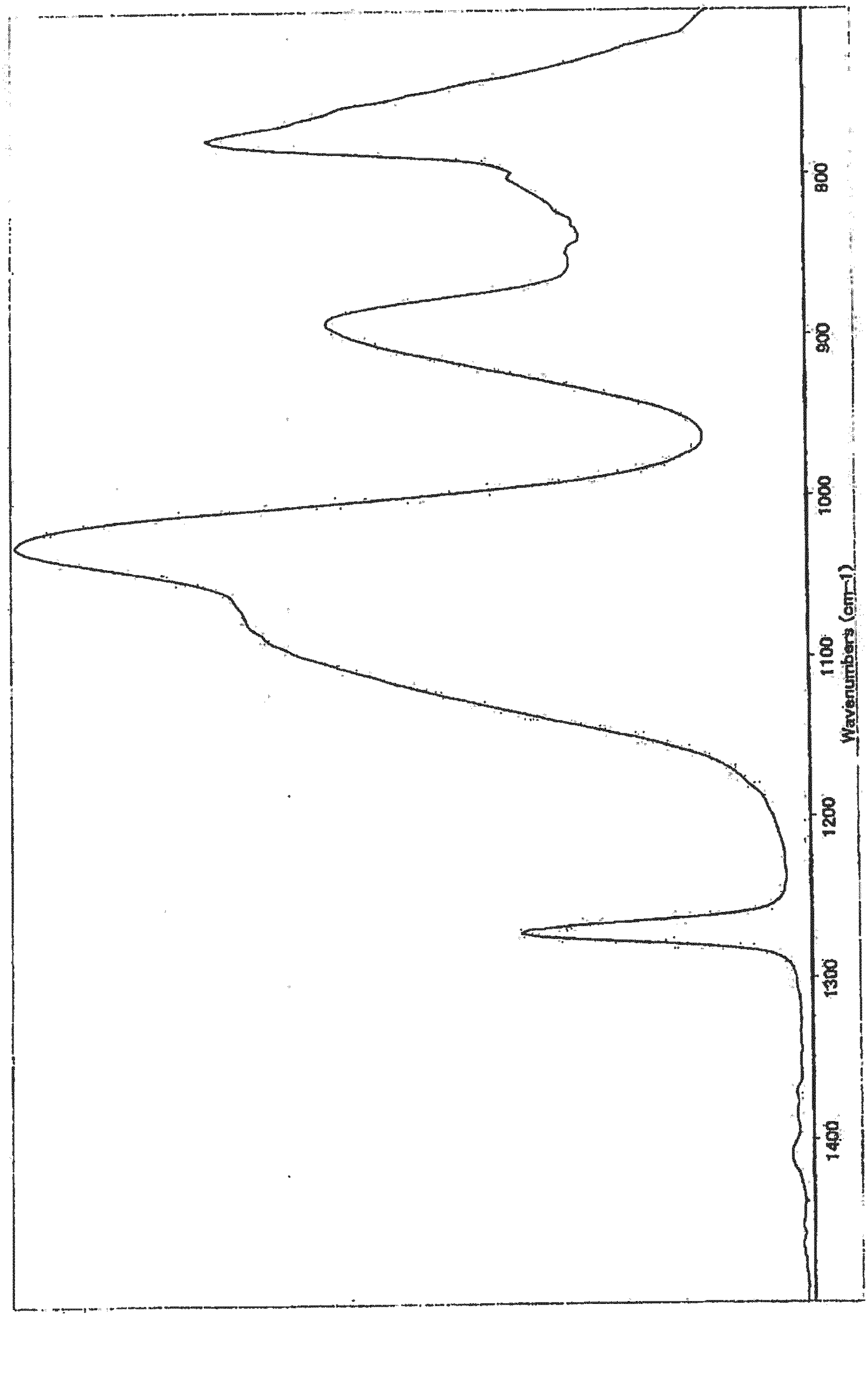

[FIG. 4]

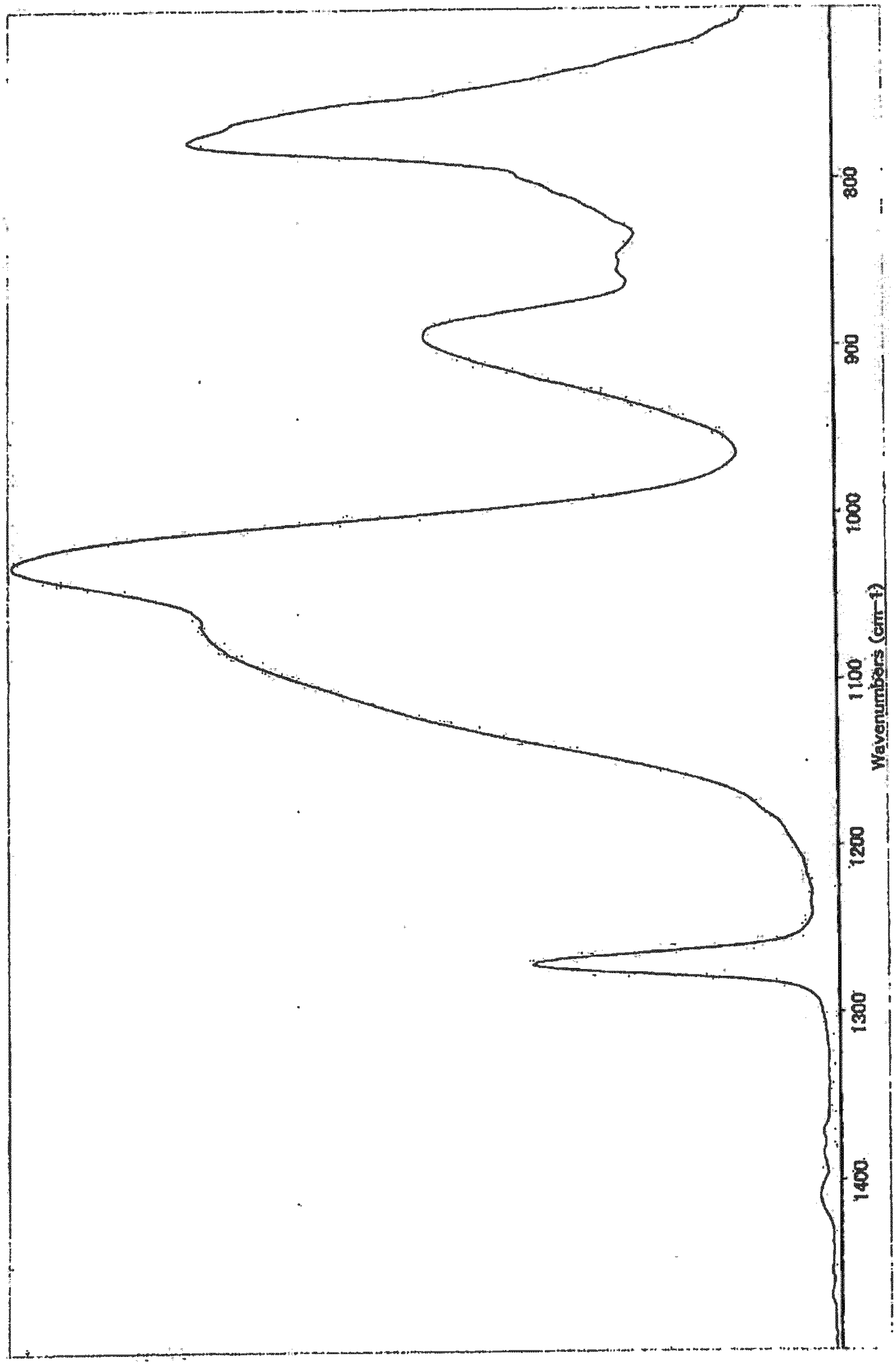

[FIG. 5]

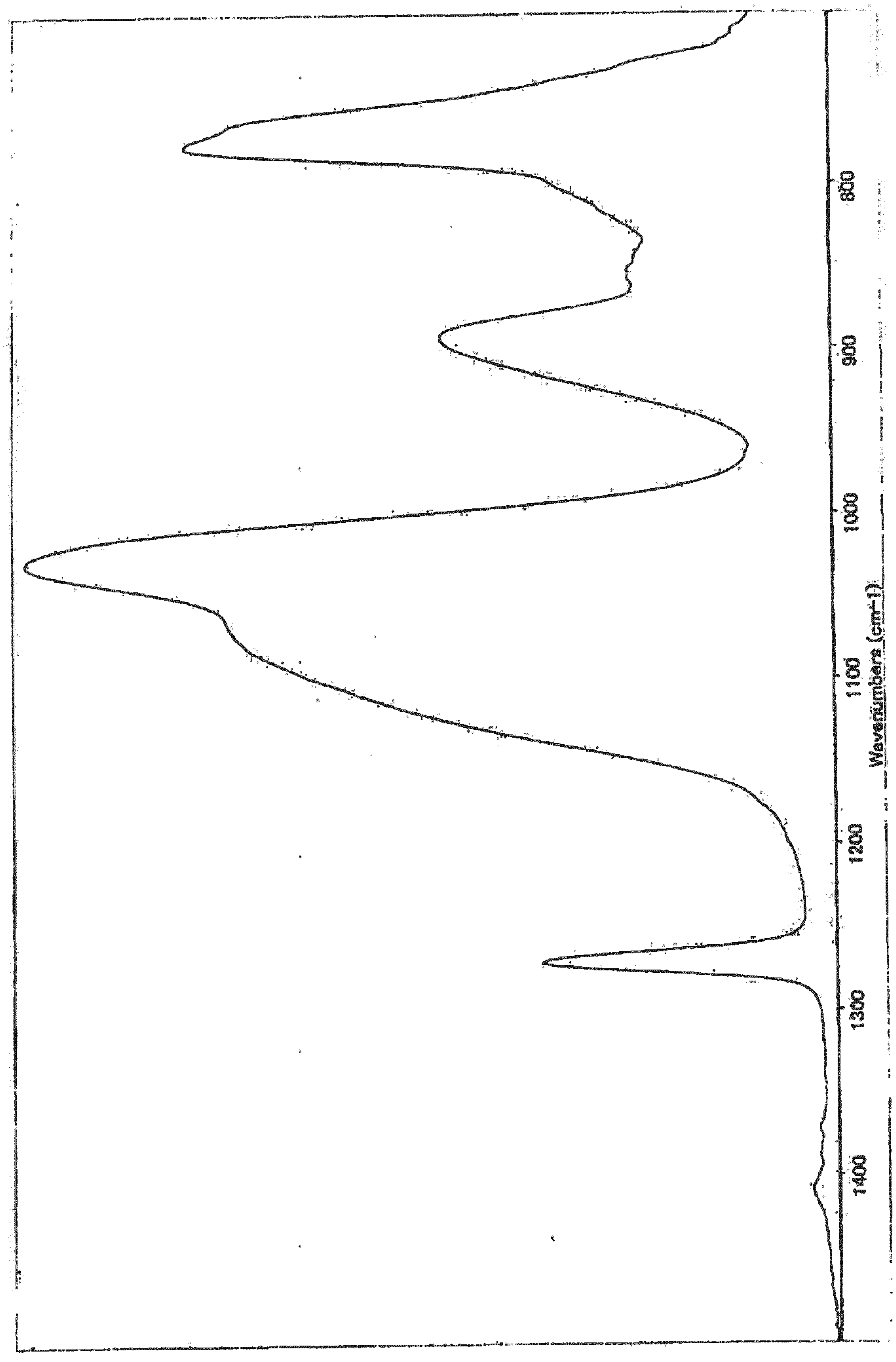

[FIG. 6]

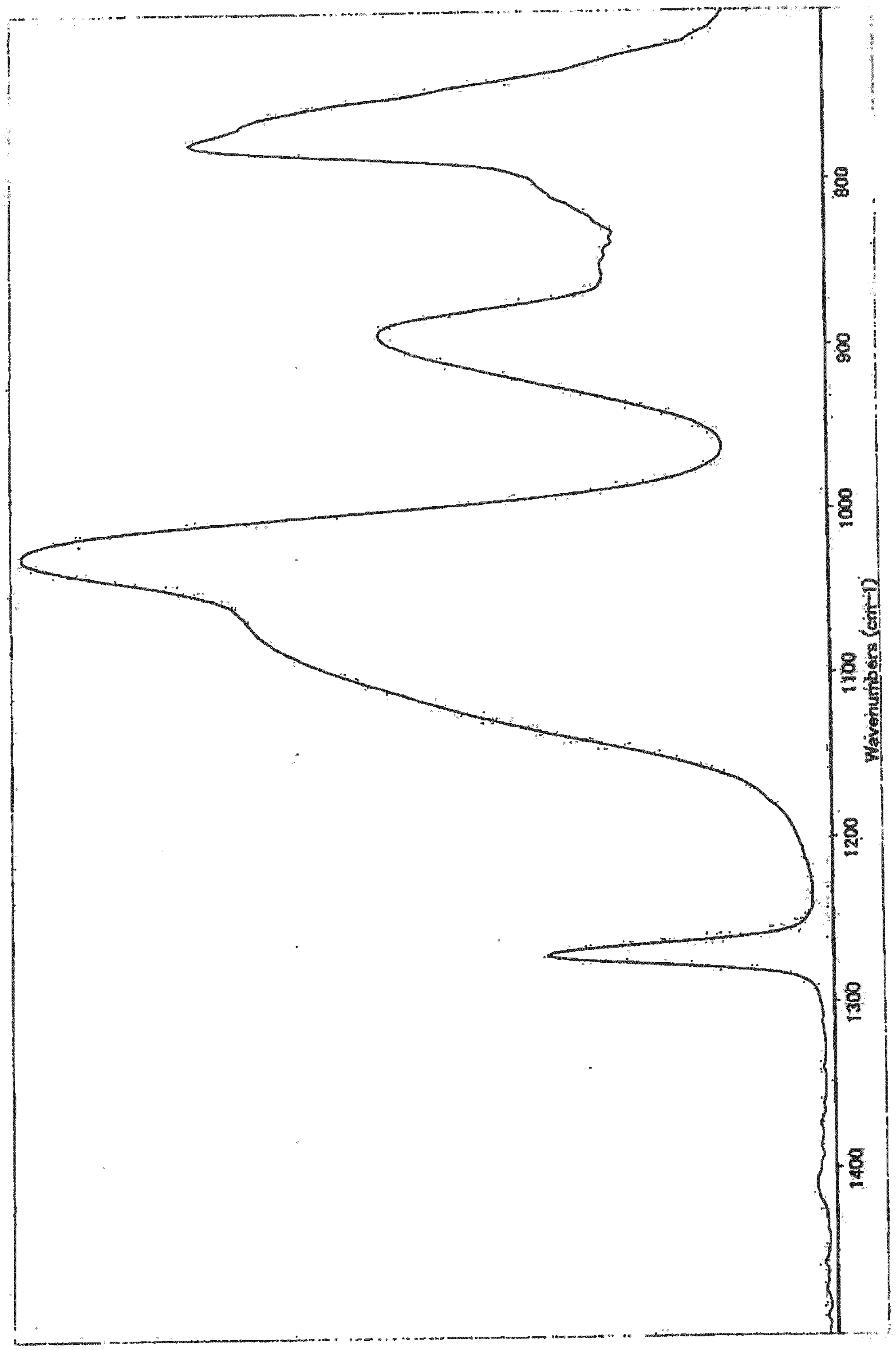

[FIG. 7]

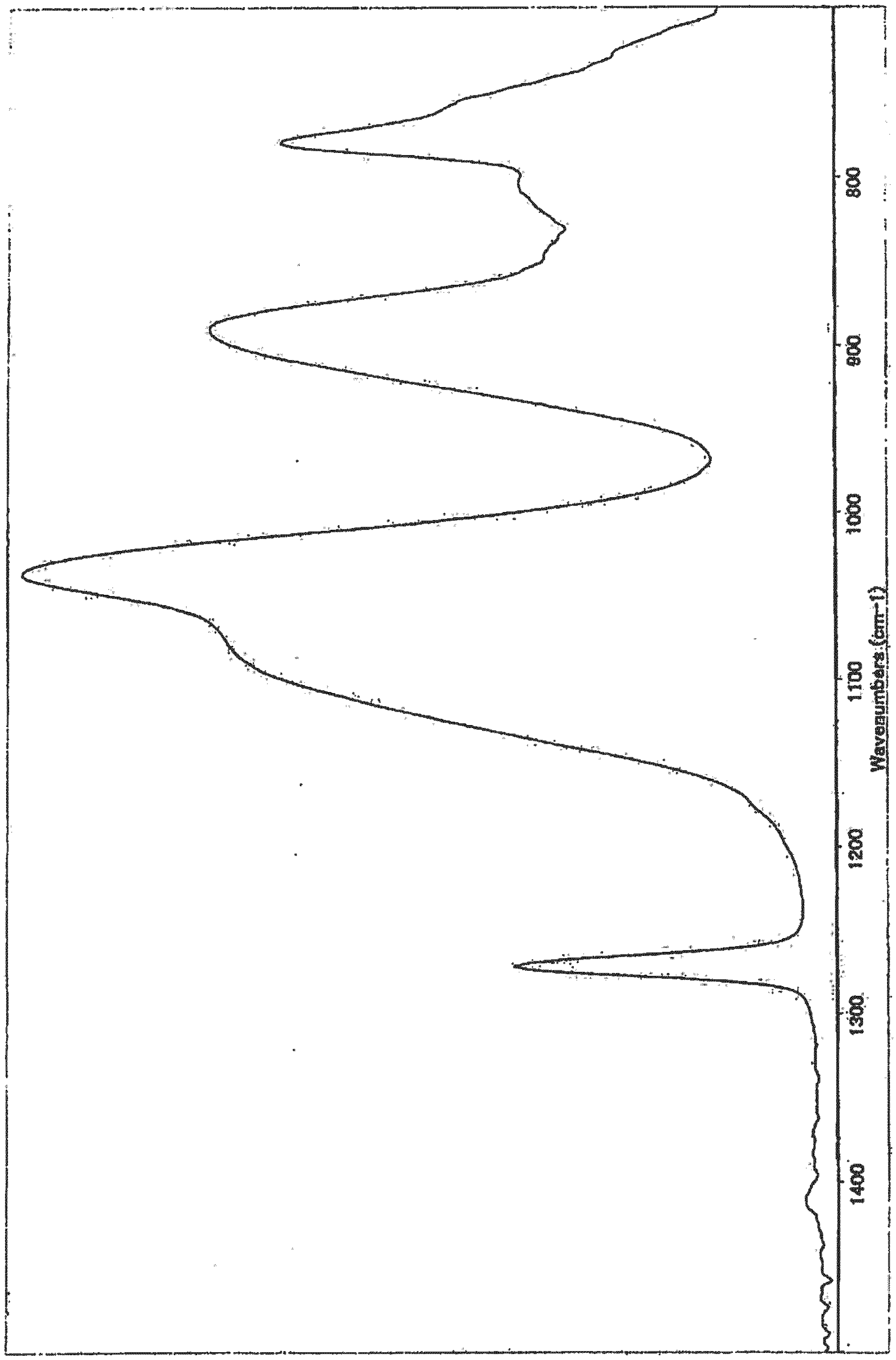

[FIG. 8]

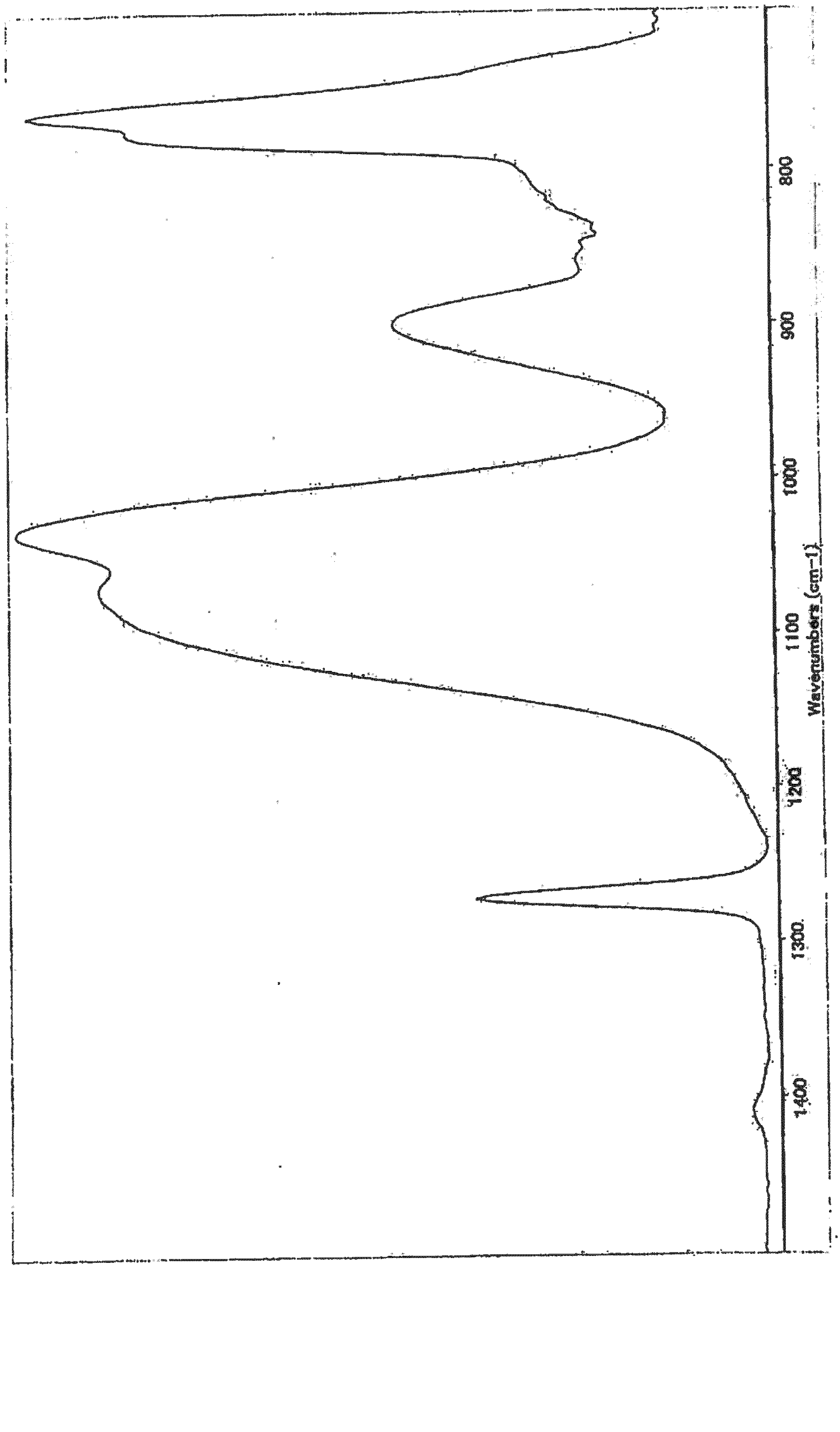

[FIG. 9]

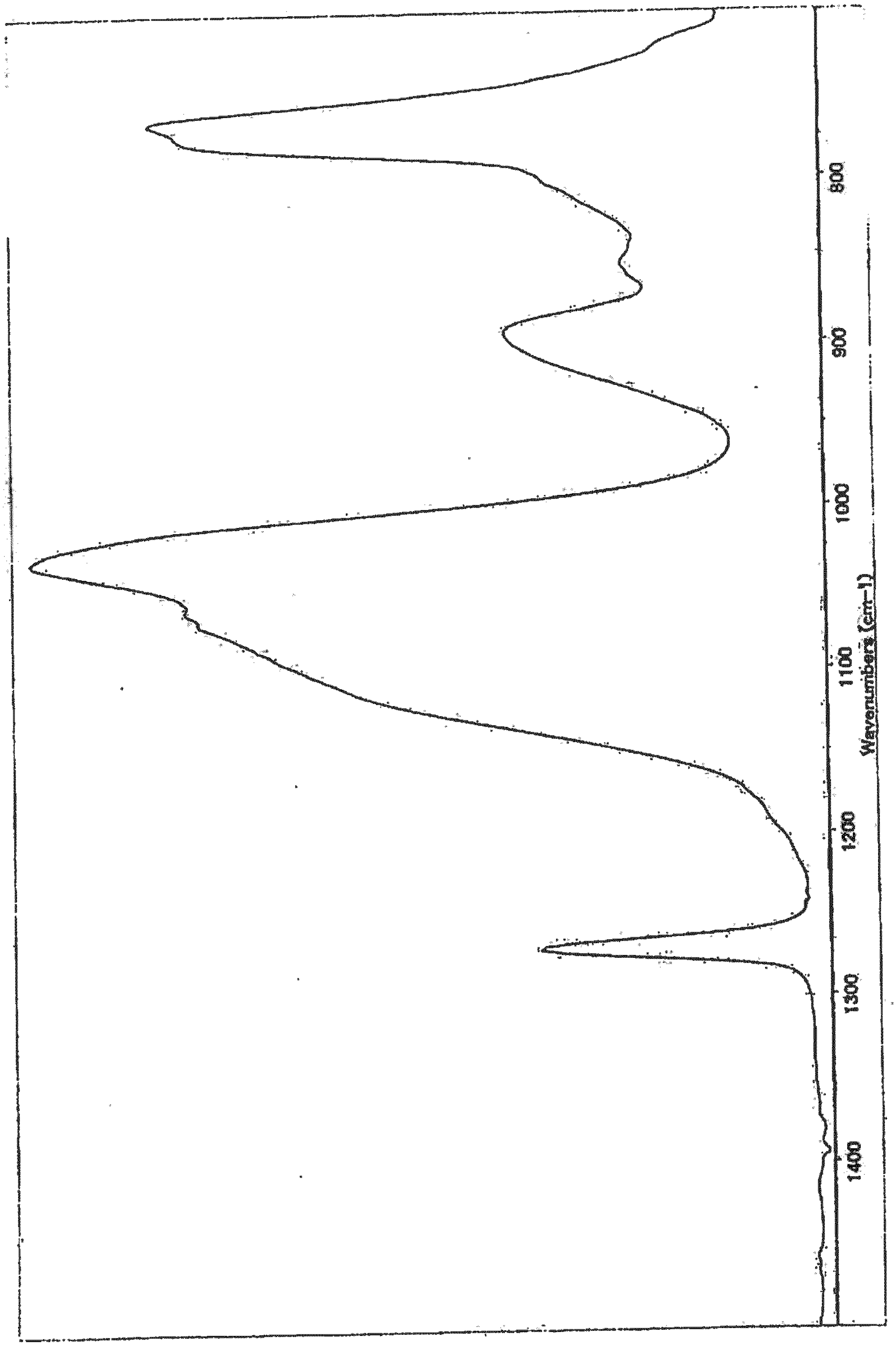

[FIG. 10]

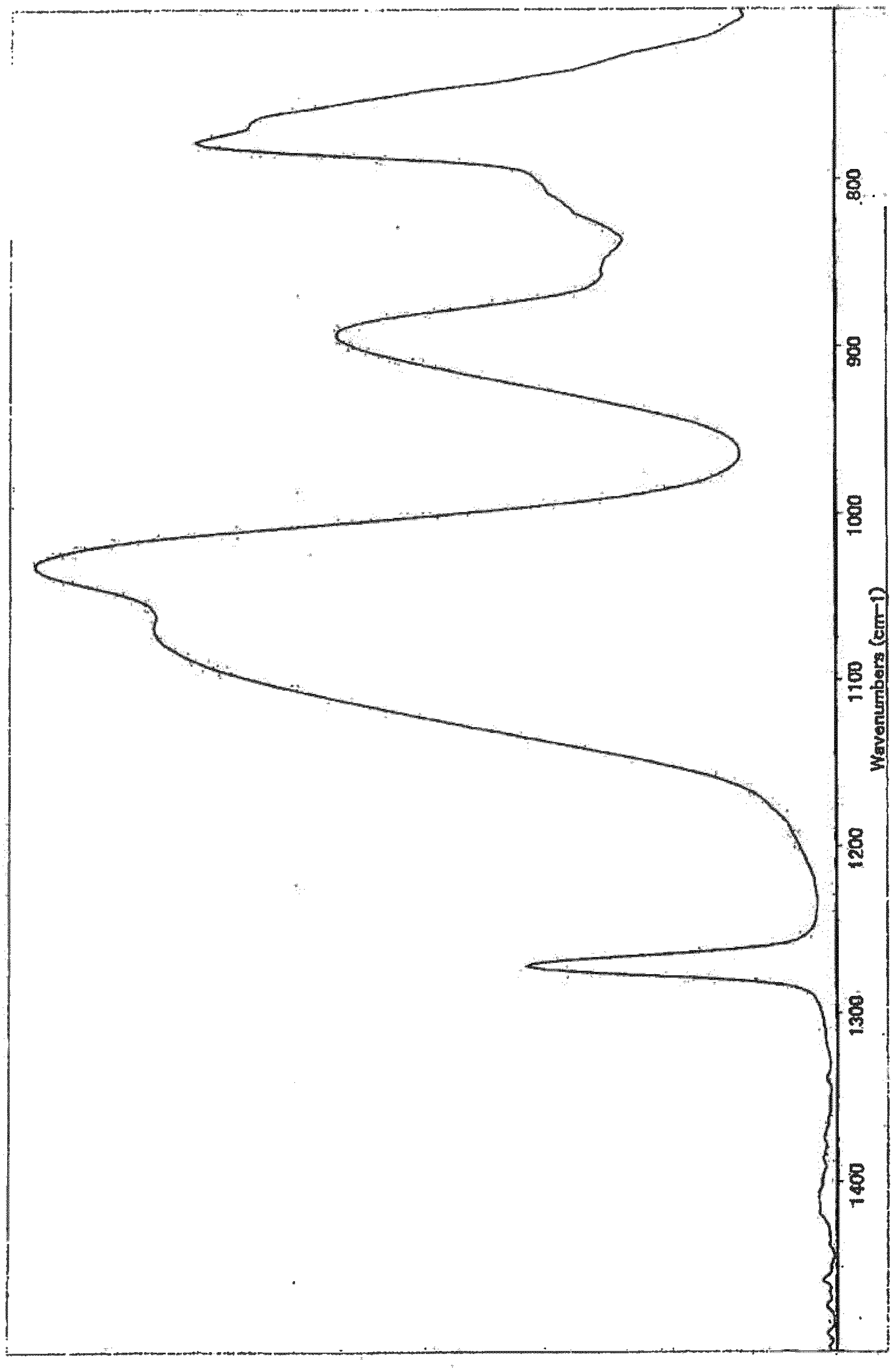

[FIG. 11]

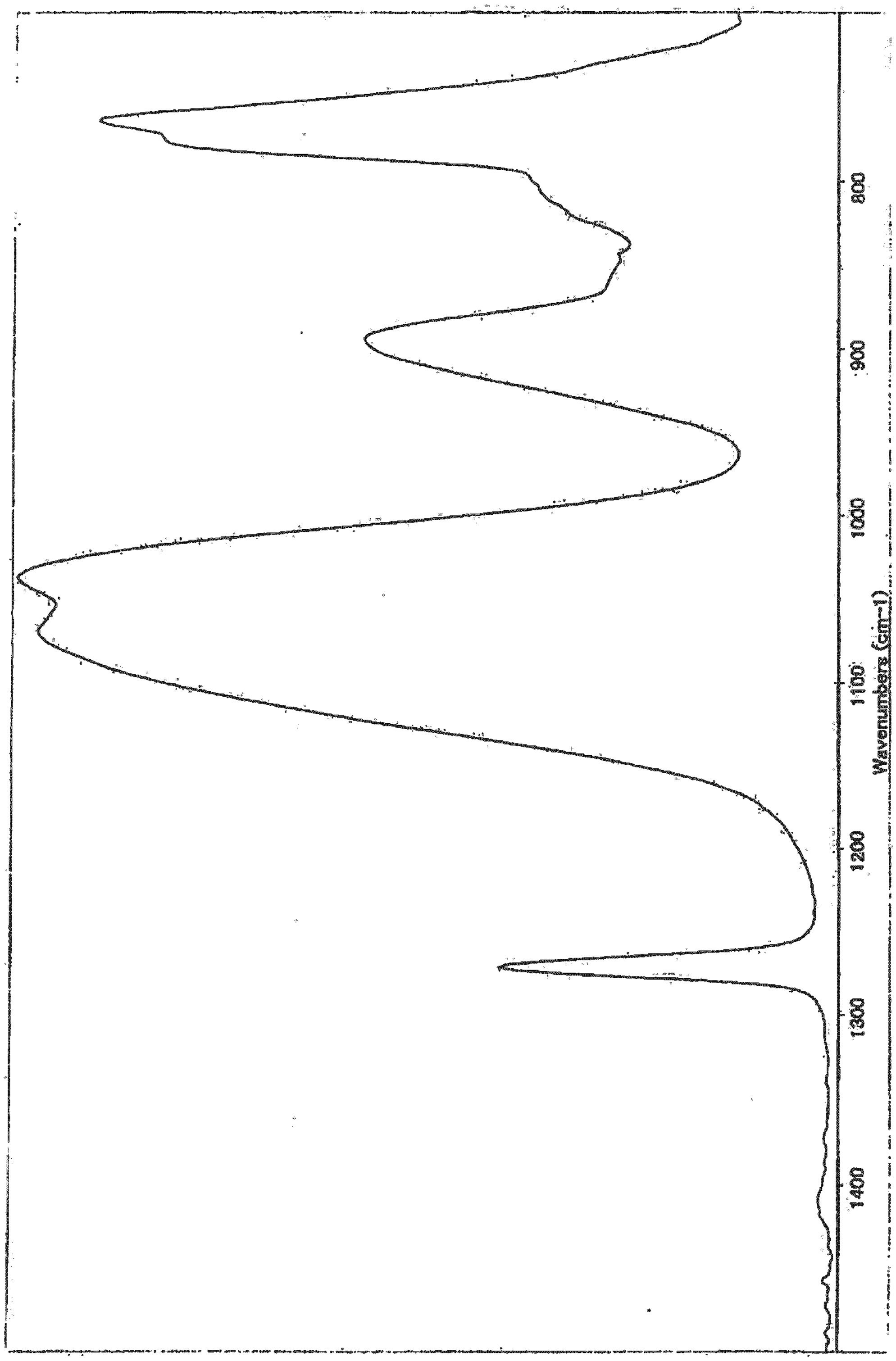

[FIG. 12]

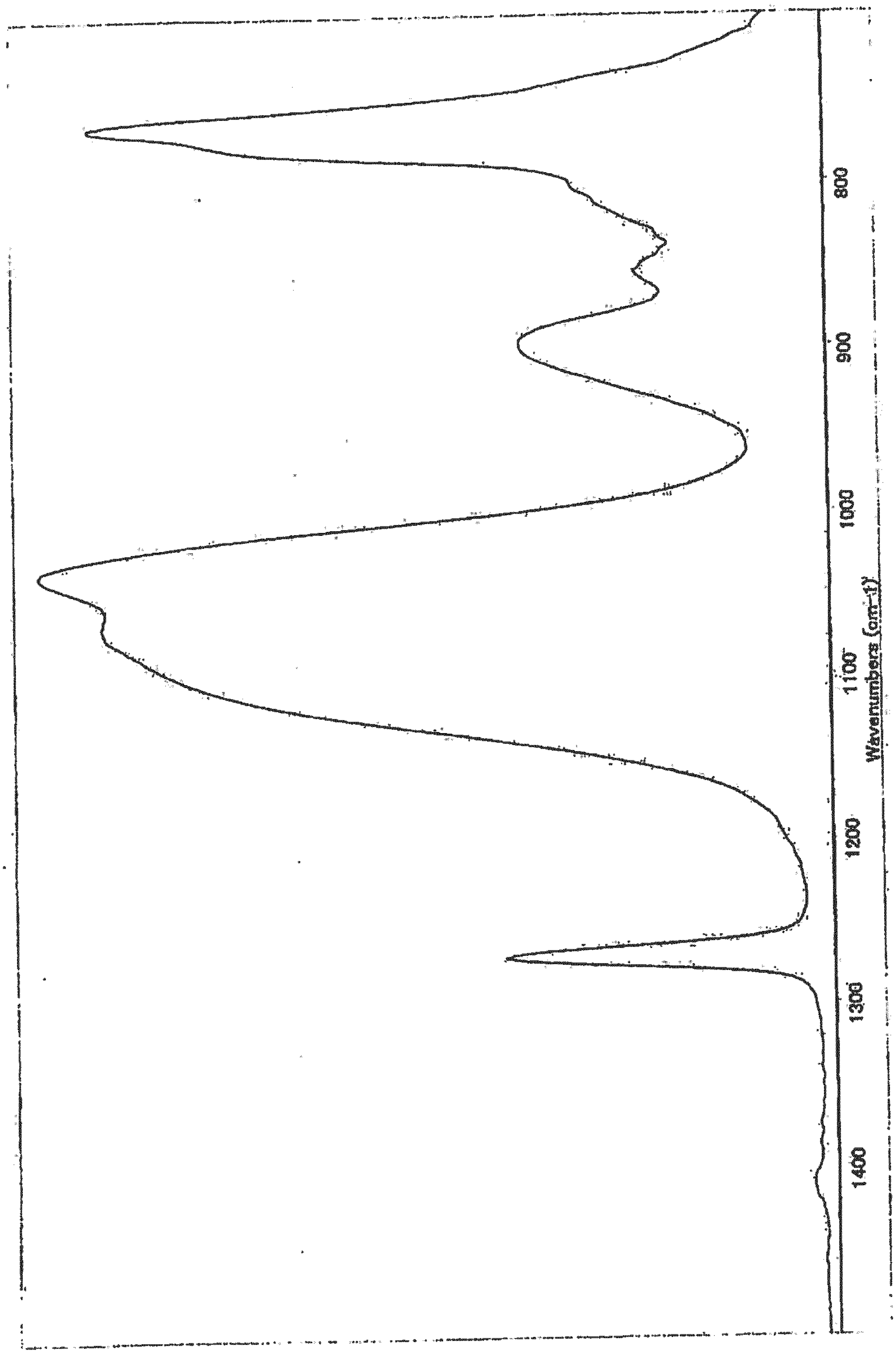

[FIG. 13]

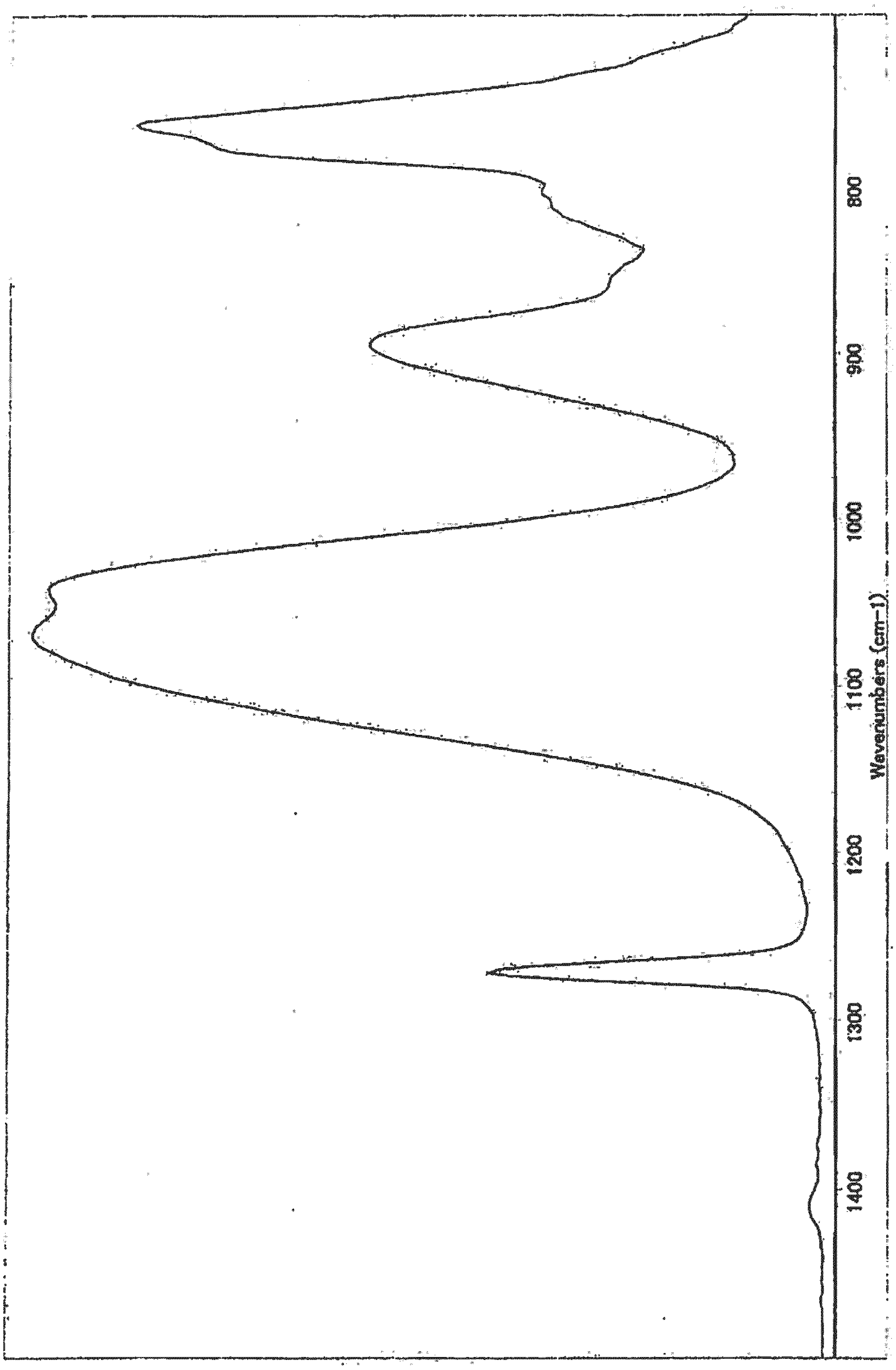

[FIG. 14]

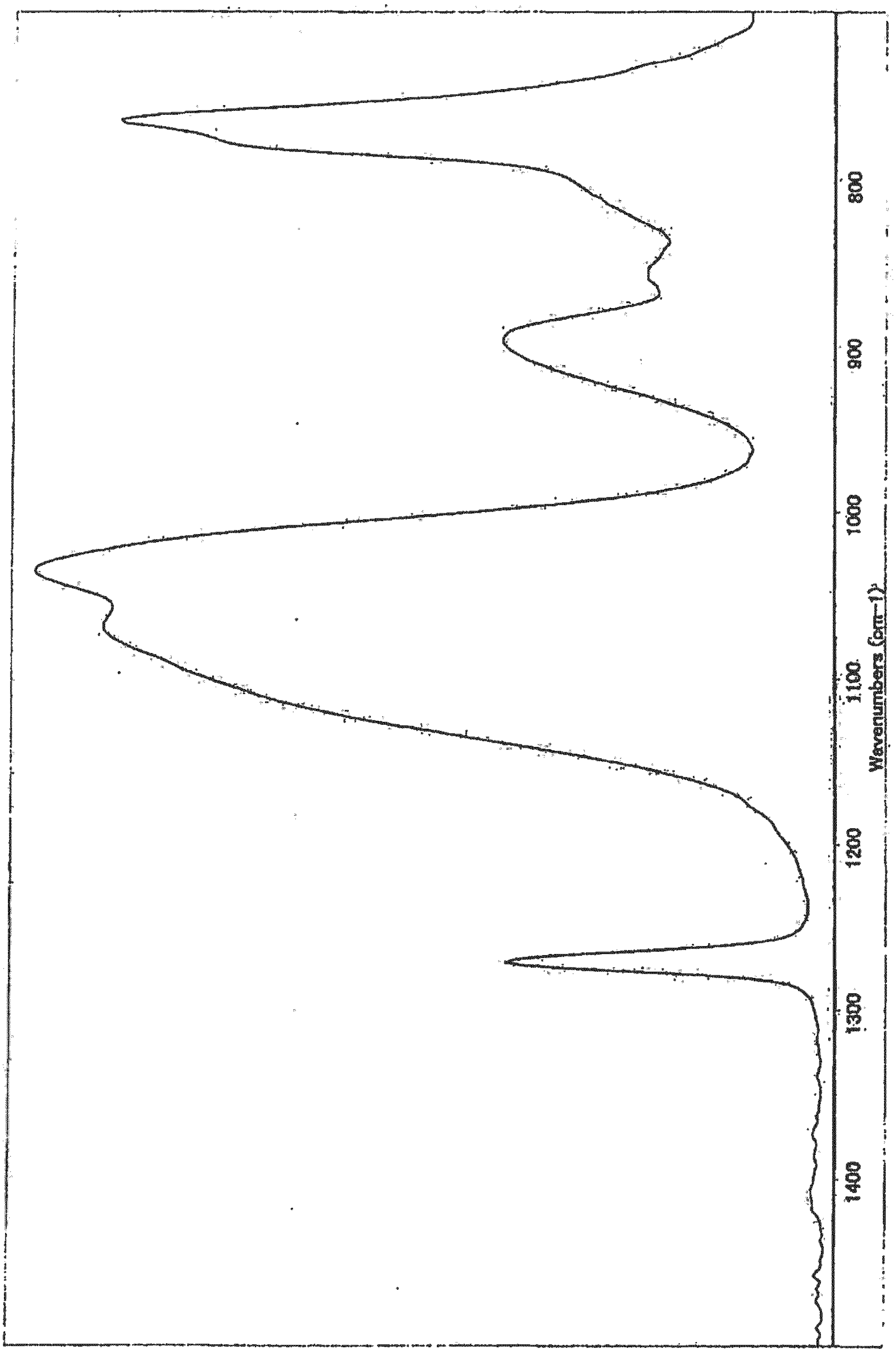

[FIG. 15]

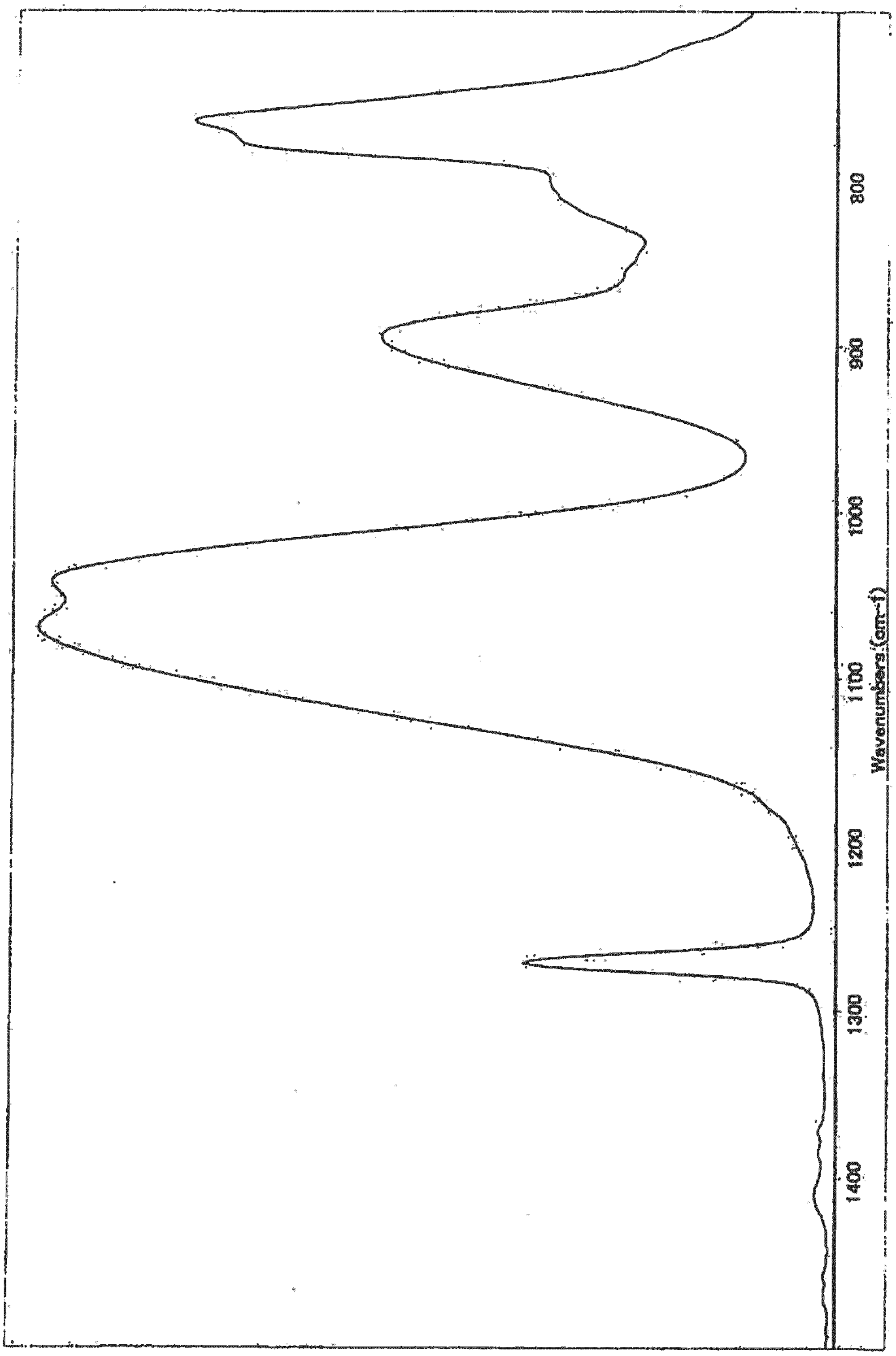

**INTERNATIONAL SEARCH REPORT**

International application No.
PCT/JP2012/063035

A. CLASSIFICATION OF SUBJECT MATTER
*C07F7/08*(2006.01)i, *C08G77/08*(2006.01)i, *C09D7/12*(2006.01)i, *C09D183/00*(2006.01)i

According to International Patent Classification (IPC) or to both national classification and IPC

B. FIELDS SEARCHED

Minimum documentation searched (classification system followed by classification symbols)
C07F7/08, C08G77/08, C09D7/12, C09D183/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| P,X | JP 2011-246702 A (Mitsubishi Rayon Co., Ltd.), 08 December 2011 (08.12.2011), claims; paragraphs [0014], [0016], [0044] to [0050] (Family: none) | 1-7 |
| X | WO 2011/013630 A1 (Nissan Chemical Industries, Ltd.), 03 February 2011 (03.02.2011), claims; paragraphs [0044] to [0050], [0052], [0062], [0123] (Family: none) | 1-7 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
02 August, 2012 (02.08.12)

Date of mailing of the international search report
14 August, 2012 (14.08.12)

Name and mailing address of the ISA/
Japanese Patent Office

Authorized officer

Facsimile No.

Telephone No.

Form PCT/ISA/210 (second sheet) (July 2009)

INTERNATIONAL SEARCH REPORT

International application No. PCT/JP2012/063035

C (Continuation). DOCUMENTS CONSIDERED TO BE RELEVANT

| Category* | Citation of document, with indication, where appropriate, of the relevant passages | Relevant to claim No. |
|---|---|---|
| X | JP 2010-251434 A (Nissan Chemical Industries, Ltd.), 04 November 2010 (04.11.2010), claims; paragraph [0025] (Family: none) | 1-7 |
| X | JP 2008-134612 A (Sanyo Chemical Industries, Ltd.), 12 June 2008 (12.06.2008), claims; paragraphs [0032] to [0034], [0042] to [0044], [0048] & KR 10-2008-0039273 A & CN 101178541 A & TW 200846829 A | 1-7 |
| X | JP 2008-116493 A (Sanyo Chemical Industries, Ltd.), 22 May 2008 (22.05.2008), claims; paragraphs [0050] to [0052], [0060] to [0062], [0066] (Family: none) | 1-7 |
| X | JP 7-126388 A (Director General, Agency of Industrial Science and Technology), 16 May 1995 (16.05.1995), claims; paragraphs [0010], [0020] to [0024] (Family: none) | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009108109 A


### Non-patent literature cited in the description


- **LONG-HUA LEE.** *Journal of Polymer Science: Part A: Polymer Chemistry,* 2002, vol. 40, 1560-1571
- **C. JEFFREY BRINKER ; GEORGE W. SCHERER.** Sol-Gel Science, The Physics and Chemistry of Sol-Gel Processing. Academic Press, 1990, 148